(19)

Europäisches Patentamt
European Patent Office
Office européen des brevets

(11) **EP 4 496 207 A1**

(12) **EUROPEAN PATENT APPLICATION**
published in accordance with Art. 153(4) EPC

(43) Date of publication:
**22.01.2025 Bulletin 2025/04**

(21) Application number: **22932040.3**

(22) Date of filing: **16.03.2022**

(51) International Patent Classification (IPC):
*H02P 21/22* (2016.01)

(52) Cooperative Patent Classification (CPC):
H02P 21/22

(86) International application number:
**PCT/JP2022/011851**

(87) International publication number:
**WO 2023/175760 (21.09.2023 Gazette 2023/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **MORI Tatsuya
Tokyo 100-8310 (JP)**

• **ISHIKAWA Kosuke
Tokyo 100-8310 (JP)**
• **FUJIMOTO Chiaki
Tokyo 100-8310 (JP)**
• **NAKAYA Hirotaka
Tokyo 100-8310 (JP)**
• **SAWADA Kenta
Tokyo 100-8310 (JP)**
• **HARADA Shingo
Tokyo 100-8310 (JP)**

(74) Representative: **Hoffmann Eitle
Patent- und Rechtsanwälte PartmbB
Arabellastraße 30
81925 München (DE)**

(54) **CONTROL DEVICE FOR AC ROTATING MACHINE AND ELECTRIC POWER STEERING DEVICE**

(57)     A control device of an AC rotating machine includes an inverter that applies a voltage to the AC rotating machine, a current detector that detects a rotating machine current flowing through the AC rotating machine, a first axis voltage command value calculator that calculates a voltage command value of a first axis of two rotational axes of the AC rotating machine, and a second axis voltage command value calculator that calculates a voltage command value of a second axis of the two rotational axes. The first axis voltage command value calculator performs an integral calculation using a first deviation that is a deviation between a current command value on the first axis and a detected current value of the rotating machine current on the first axis, and a second deviation that is a deviation between a current command value on the second axis and a detected current value of the rotating machine current on the second axis, and calculates the voltage command value of the first axis on the basis of the result of the integral calculation.

FIG. 1

## Description

[Technical Field]

The present disclosure relates to a control device for an AC rotating machine and an electric power steering device.

[Background Art]

Patent Document 1 discloses a control device that compensates for an interference term in two rotational axes (for example, a d-axis and a q-axis) in vector control of an AC rotating machine. The control device includes a current PI controller and a non-interference error corrector. The current PI controller includes two integrators corresponding to the d-axis and the q-axis, respectively, in order to perform proportional/integral control. Similarly, the non-interference error corrector also includes two integrators corresponding to the d-axis and the q-axis, respectively.

[Citation List]

[Patent Document]

[Patent Document 1]

Japanese Unexamined Patent Application, First Publication No. 2010-119245

[Summary of Invention]

[PROBLEM TO BE SOLVED BY THE INVENTION]

In such a control device, windup in the integrator may cause a phenomenon (so-called overshoot, or the like) in which control accuracy is reduced. As a method for curbing windup in an integrator, it is effective to perform anti-windup such as limiting an integral term to an appropriate value.

Here, in the configuration of Patent Document 1, for example, when a d-axis voltage command value is calculated, a calculation result of the integrator in a current PI controller and a calculation result of the integrator in the non-interference error corrector are used. In this way, when the calculation results of two integrators for one control target value (for example, the d-axis voltage command value) are used, it is difficult to perform the anti-windup appropriately. As a result, there is a problem that control becomes unstable.

The present disclosure has been made in view of the above circumstances, and an object thereof is to provide a control device of an AC rotating machine and an electric power steering device that can perform more stable control.

[MEANS TO SOLVE THE PROBLEM]

In order to achieve the aforementioned objects, a control device of an AC rotating machine according to one aspect of the present disclosure includes an inverter that applies a voltage to the AC rotating machine, a current detector that detects a rotating machine current flowing through the AC rotating machine, a first axis voltage command value calculator that calculates the voltage command value of a first axis of two rotational axes of the AC rotating machine, and a second axis voltage command value calculator that calculates a voltage command value of a second axis of the two rotational axes, wherein the first axis voltage command value calculator performs an integral calculation using a first deviation that is a deviation between a current command value on the first axis and a detected current value of the rotating machine current on the first axis, and a second deviation that is a deviation between a current command value on the second axis and a detected current value of the rotating machine current on the second axis, and calculates the voltage command value of the first axis on the basis of the result of the integral calculation.

An electric power steering device according to one aspect of the present disclosure includes the control device of the AC rotating machine, the AC rotating machine, and a driving force transmission mechanism that transmits a driving force of the AC rotating machine to a steering system of a vehicle.

[EFFECTS OF THE INVENTION]

According to the present disclosure, it is possible to provide a control device of an AC rotating machine and an electric power steering device that can perform more stable control.

[Brief Description of Drawings]

FIG. 1 is a block diagram showing a schematic configuration of a control device of a rotating machine according to a first embodiment.
FIG. 2 is a diagram showing a principle of generation of switching signals in the first embodiment.
FIG. 3 is a block diagram showing the configuration of a d-axis voltage command value calculator in FIG. 1.
FIG. 4 is a block diagram showing the configuration of a q-axis voltage command value calculator in FIG. 1.
FIG. 5 is a flowchart showing an example of processing performed by a corrected voltage generator of FIG. 1.
FIG. 6 is a diagram showing an example of waveforms of a voltage command value and a corrected voltage command value in the first embodiment.

FIG. 7 is a Bode diagram showing a transfer characteristic from a q-axis current command value to a q-axis detected current value when a rotational angular speed is high in the control device according to the first embodiment.

FIG. 8 is a block diagram showing the schematic configuration of a control device of a rotating machine according to a second embodiment.

FIG. 9 is a block diagram showing the configuration of a d-axis voltage command value calculator according to the second embodiment.

FIG. 10 is a block diagram showing the configuration of a q-axis voltage command value calculator according to the second embodiment.

FIG. 11 is a diagram showing a relationship between a proportional gain, a limit gain, and a voltage amplitude in the second embodiment.

FIG. 12 is a graph showing an example of a waveform of a terminal voltage of a shunt resistor in the second embodiment.

FIG. 13 is a diagram showing a case in which some values of corrected voltage commands are larger than an upper limit value in the second embodiment.

FIG. 14 is a block diagram showing the schematic configuration of an electric power steering device according to a third embodiment.

FIG. 15 is a graph showing a relationship between a steering torque, a q-axis current command value, and a vehicle speed in the third embodiment.

FIG. 16 is a diagram showing a relationship between a vehicle speed and a proportional gain in the third embodiment.

FIG. 17 is a block diagram showing the schematic configuration of an electric power steering device according to a fourth embodiment.

FIG. 18 is a diagram showing a relationship between the amount of change in steering torque and a limit gain in the fourth embodiment.

[Description of Embodiments]

Hereinafter, a control device of a rotating machine and an electric power steering device according to the present disclosure will be described in detail with reference to the drawings.

First embodiment

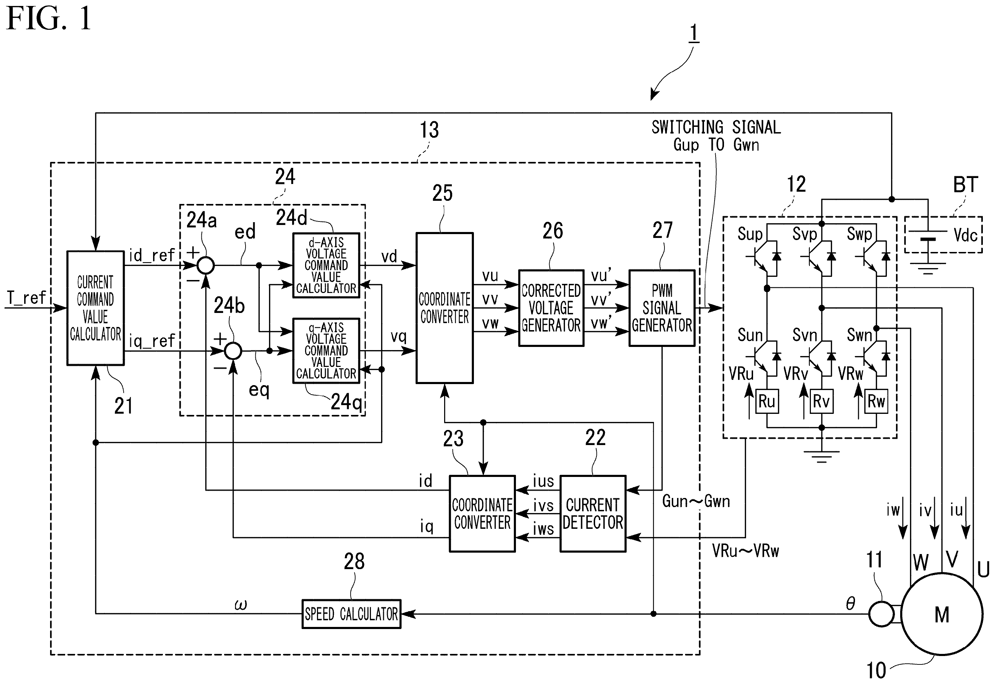

FIG. 1 is a block diagram showing a schematic configuration of a control device of a rotating machine according to a first embodiment. As shown in FIG. 1, the control device 1 includes a rotor position detector 11, an inverter 12, and a controller 13. The control device 1 controls a rotating machine 10 on the basis of a torque command T_ref as a control command that is input from outside the control device 1.

The rotating machine 10 is a three-phase AC rotating machine having three-phase windings U, V, and W. Moreover, the rotating machine 10 is an AC rotating machine that can be controlled on the basis of two rotational axes. In this specification, "two rotational axes" means two axes that rotate in synchronization with a rotor of the rotating machine 10 and are orthogonal to each other in a cross section. The "cross section" is a cross section perpendicular to a central axis of the rotor. For example, the two rotational axes may be d and q axes. The d-axis is an axis that connects the central axis of the rotor with magnetic poles. The q-axis is an axis perpendicular to both the d-axis and the central axis. Furthermore, the two rotational axes may be $\gamma$ and $\delta$ axes. The $\gamma$-axis is an axis shifted from the d-axis in a rotational direction. The $\delta$-axis is an axis perpendicular to both the $\gamma$-axis and the central axis. One of the two rotational axes is referred to as a first axis, and the other is referred to as a second axis. For example, when the d-axis is referred to as the first axis, the q-axis is referred to as the second axis. The q-axis may be the first axis, and the d-axis may be the second axis. Similarly, when the $\gamma$-axis is referred to as the first axis, the $\delta$-axis is referred to as the second axis.

In the following, a case in which the rotating machine 10 is a permanent magnet synchronous rotating machine and the two rotational axes are the d and q axes will be described. However, the rotating machine 10 may be, for example, a wound field synchronous rotating machine, an induction rotating machine, a synchronous reluctance motor, or the like. Furthermore, the d-axis and the q-axis in the present disclosure below may be replaced with the $\delta$-axis and the $\gamma$-axis.

The rotor position detector 11 includes a resolver, an encoder, an MR (magnetic resistance) sensor, or the like, and detects a rotor position $\theta$ using the aforementioned. The rotor position $\theta$ is a position of the rotor of the rotating machine 10 in the rotational direction. In this embodiment, the rotor position $\theta$ of the rotating machine 10 is detected using the rotor position detector 11. However, it is also possible to adopt a configuration in which the rotor position $\theta$ of the rotating machine 10 is estimated without using the rotor position detector 11. That is, in the present disclosure, the control device 1 may not include the rotor position detector 11.

The inverter 12 is a power converter that applies a voltage to the rotating machine 10. Specifically, under control of the controller 13, the inverter 12 converts DC power supplied from a DC power source BT into AC power, and supplies the converted AC power to the rotating machine 10. The DC power source BT includes devices for supplying DC power, such as a battery, a DC-DC converter, a diode rectifier, and a pulse width modulation (PWM) rectifier. In this specification, the output voltage (DC bus voltage) of the DC power source BT is indicated as Vdc.

The inverter 12 includes upper arm switching elements Sup, Svp, and Swp, lower arm switching elements Sun, Svn, and Swn, and shunt resistors Ru, Rv, and Rw. The upper arm switching elements Sup, Svp, and Swp are connected to a positive electrode of the DC power source BT. The lower arm switching elements Sun, Svn, and Swn are connected to the upper arm switching elements Sup, Svp, and Swp, respectively, and are also connected to a negative electrode of the DC power source BT via the shunt resistors Ru, Rv, and Rw, respectively.

Here, a U-phase series circuit is formed by the upper arm switching element Sup, the lower arm switching element Sun, and the shunt resistor Ru. In this U-phase series circuit, a connection point between the upper arm switching element Sup and the lower arm switching element Sun is connected to the winding U of the rotating machine 10.

Further, a V-phase series circuit is formed by the upper arm switching element Svp, the lower arm switching element Svn, and the shunt resistor Rv. In this V-phase series circuit, a connection point between the upper arm switching element Svp and the lower arm switching element Svn is connected to the winding V of the rotating machine 10.

Further, a W-phase series circuit is formed by the upper arm switching element Swp, the lower arm switching element Swn, and the shunt resistor Rw. In this W-phase series circuit, a connection point between the upper arm switching element Swp and the lower arm switching element Swn is connected to the winding W of the rotating machine 10.

As the upper arm switching elements Sup, Svp, and Swp and the lower arm switching elements Sun, Svn, and Swn, semiconductor switches such as an insulated Gate bipolar transistor (IGBTs), a bipolar transistor, and a metal-oxide-semiconductor field effect transistor (MOSFETs) can be used, for example.

Switching signals Gup, Gvp, and Gwp output from the controller 13 are input to the upper arm switching elements Sup, Svp, and Swp, respectively. Switching signals Gun, Gvn, and Gwn output from the controller 13 are input to the lower arm switching elements Sun, Svn, and Swn, respectively. The upper arm switching elements Sup, Svp, and Swp and the lower arm switching elements Sun, Svn, and Swn are in an ON state or in an OFF state according to the switching signals Gup, Gvp, Gwp, Gun, Gvn, and Gwn output from the controller 13. In this specification and the drawings, the switching signals Gup, Gvp, Gwp, Gun, Gvn, and Gwn may be collectively referred to as "switching signals Gup to Gwn."

For example, when the switching signal Gup is an "ON command (=1)," the upper arm switching element Sup is in the ON state, and when the switching signal Gup is an "OFF command (=0)," the upper arm switching element Sup is in the OFF state. The same applies to other switching elements (the upper arm switching elements Svp, and Swp and the lower arm switching elements Sun, Svn, and Swn). In this way, the inverter 12 generates AC power to be supplied to the rotating machine 10 from the DC power supplied by the DC power source BT.

The shunt resistors Ru, Rv, and Rw are resistance elements for current detection.

The shunt resistor Ru outputs to the controller 13 a terminal voltage VRu (=-Ru×iu) which is proportional to a current (a rotating machine current) iu flowing through the winding U of the rotating machine 10. The shunt resistor Rv outputs to the controller 13 a terminal voltage VRv (=-Rv×iv) which is proportional to a current (a rotating machine current) iv flowing through the winding V of the rotating machine 10. The shunt resistor Rw outputs to the controller 13 a terminal voltage VRw (=-Rw×iw) which is proportional to a current (a rotating machine current) iw flowing through the winding W of the rotating machine 10. In this specification and the drawings, the terminal voltages VRu, VRv, and VRw may be collectively referred to as "terminal voltages VRu to VRw."

Here, the terminal voltages VRu, VRv, and VRw are values that are obtained by multiplying the rotating machine currents iu, iv, and iw by resistance values of the shunt resistors Ru, Rv, and Rw, and are amounts that are proportional to the currents iu, iv, and iw. Therefore, it can be said that the terminal voltages VRu, VRv, and VRw are values (detected values of the rotating machine current) that detect the currents.

The inverter 12 may be integrally formed with the rotating machine 10. The integrated inverter 12 and rotating machine 10 are referred to as a power pack.

The controller 13 uses the torque command T_ref, the terminal voltages VRu, VRv, and VRw, and the rotor position θ as input values, and generates the switching signals Gup to Gwn that drive the inverter 12 on the basis of the input values. The controller 13 is, for example, a PWM controller that is realized by a discrete time calculator of a microcomputer or a digital signal processor (DSP). The controller 13 includes a current command value calculator 21, a current detector 22, a coordinate converter 23 (a coordinate converter for detection), a voltage command value calculation unit 24, a coordinate converter 25 (a coordinate converter for control), a corrected voltage generator 26, a PWM signal generator 27, and a speed calculator 28.

The speed calculator 28 calculates a rotational angular speed ω of the rotating machine 10 by performing a differential calculation or difference calculation on the rotor position θ. The speed calculator 28 inputs the obtained rotational angular speed ω to the current command value calculator 21 as well as to a d-axis voltage command value calculator 24d and a q-axis voltage command value calculator 24q of the voltage command value calculation unit 24.

The current command value calculator 21 calculates current command values id_ref and iq_ref on the basis of the torque command T_ref, the DC bus voltage Vdc, and the rotational angular speed ω. The current command values id_ref and iq_ref are command values (target values) of the current to be applied to the rotating machine 10. id_ref is also called a "weakened field current command value," and iq_ref is also called a "torque current command value." In the calculation method performed by the current command value calculator 21, known maximum torque per ampere (MTPA) control, maximum torque per voltage (MTPV) control, and weakened flux control may be used in appropriate combination for each operational range (range of speed-torque characteristics). The rotational angular speed ω may be converted into a rotational speed of the rotor, and each control may be performed using the rotational speed.

Next, the PWM signal generator 27 will be described. The PWM signal generator 27 outputs PWM-modulated switching signals Gup to Gwn on the basis of the corrected voltage command values vu', vv', and vw' output from the corrected voltage generator 26. The corrected voltage command values vu', vv', and vw' will be described below.

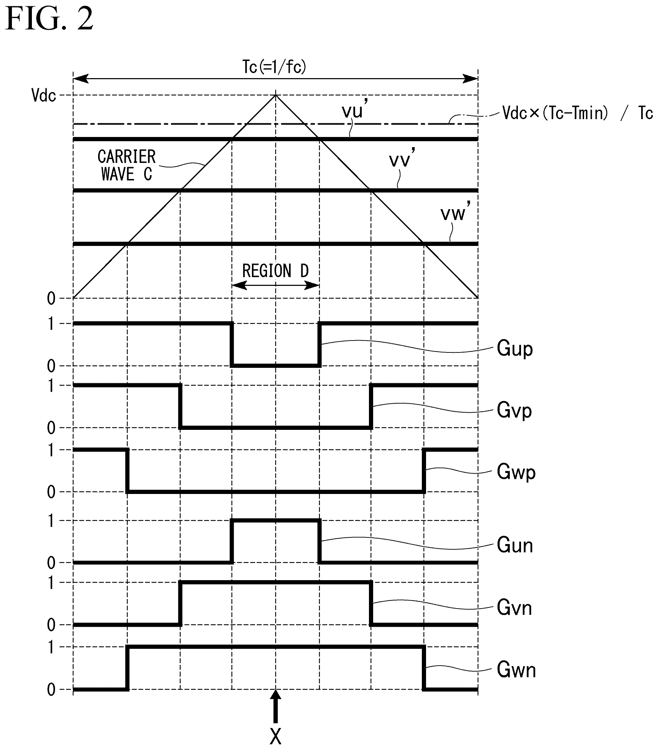

FIG. 2 is a diagram showing a principle of generation of the switching signals in the first embodiment. The PWM signal generator 27 generates the switching signals Gup to Gwn by comparing the corrected voltage command values vu', vv', and vw' with a carrier triangular wave (a carrier wave) C having a cycle Tc (a frequency fc). The corrected voltage command values vu', vv', and vw' correspond to the U phase, V phase, and W phase, respectively.

Specifically, when the corrected voltage command value vu' is larger than a carrier triangular wave C, the PWM signal generator 27 sets the switching signal Gup to ON ("1") and the switching signal Gun to OFF ("0"). Conversely, when the corrected voltage command value vu' is smaller than the carrier triangular wave C, the PWM signal generator 27 sets the switching signal Gup to OFF ("0") and the switching signal Gun to ON ("1").

Further, when the corrected voltage command value vv' is larger than the carrier triangular wave C, the PWM signal generator 27 sets the switching signal Gvp to ON ("1") and the switching signal Gvn to OFF ("0"). Conversely, when the corrected voltage command value vv' is smaller than the carrier triangular wave C, the PWM signal generator 27 sets the switching signal Gvp to OFF ("0") and the switching signal Gvn to ON ("1").

Further, when the corrected voltage command value vw' is larger than the carrier triangular wave C, the PWM signal generator 27 sets the switching signal Gwp to ON ("1") and the switching signal Gwn to OFF ("0"). Conversely, when the corrected voltage command value vw' is smaller than the carrier triangular wave C, the PWM signal generator 27 sets the switching signal Gwp to OFF ("0") and the switching signal Gwn to OFF ("1").

A short-circuit prevention time (a dead time) may be provided in the switching signals Gup to Gwn so that the upper arm switching elements Sup, Svp, and Swp and the lower arm switching elements Sun, Svn, and Swn of the inverter 12 are not in the ON state at the same time.

The switching signals Gup to Gwn include a pattern in which all of the lower arm switching elements Sun, Svn, and Swn are in the ON state in one electrical angle cycle of the rotating machine 10. Specifically, as shown by region D in FIG. 2, a pattern in which all of the switching signals Gun, Gvn, and Gwn are in the ON state (1) is included.

Here, the PWM-modulated voltage applied from the inverter 12 to the rotating machine 10 includes components that are integral multiples of the cycle Tc of the carrier triangular wave C other than components of the corrected voltage command values vu', vv', and vw'. As a result of the above, a current that is a component of an integral multiple of the cycle Tc is applied to the rotating machine 10, and the rotating machine 10 generates abnormal noise according to a value of the cycle Tc.

In order to prevent occurrence of such abnormal noise, for example, when the rotating machine 10 is used as a motor for steering assist in electric power steering, the cycle Tc of the carrier triangular wave C is set to 60 [μs] or less. By setting Tc=60 [μs], a frequency fc (=1/Tc) of the abnormal noise becomes 16.6 kHz, which is less likely to cause discomfort to humans. More preferably, the cycle Tc of the carrier triangular wave C may be set to about 50 [μs]. By setting Tc=50 [μs], the frequency fc (=1/Tc) of the abnormal sound becomes about 20 kHz, which is almost inaudible to humans. The frequency range that humans can hear is about 20 Hz to 20 kHz. In the following description, Tc=50 [μs] is used.

Next, the current detector 22 shown in FIG. 1 will be described. The current detector 22 outputs pre-conversion detected currents ius, ivs, and iws using the terminal voltages VRu, VRv, and VRw of the shunt resistors Ru, Rv, and Rw and the switching signals Gup to Gwn output from the PWM signal generator 27. Specifically, the current detector 22 obtains the terminal voltages VRu, VRv, and VRw of the shunt resistors Ru, Rv, and Rw at a timing "X" shown in FIG. 2. Such a timing "X" is a timing at which the carrier triangular wave C reaches a maximum value (a DC bus voltage Vdc).

At the timing "X," as shown in FIG. 2, all of the switching signals Gun, Gvn, and Gwn input to the lower arm switching elements Sun, Svn, and Swn are in the ON state ("1"). Therefore, the current detector 22 obtains values of the pre-conversion detected currents ius, ivs, and iws by dividing the terminal voltages VRu, VRv, and VRw of the shunt resistors Ru, Rv, and Rw by -Ru, -Rv, and -Rw, respectively.

The coordinate converter 23 performs coordinate conversion on the basis of the pre-conversion detected currents ius, ivs, and iws detected by the current detector 22 and the rotor position θ detected by the rotor position detector 11. Thus, the coordinate converter 23 calculates detected current values id and iq on two rotational axes (the d and q axes). Further, the coordinate converter 23 inputs the calculation results (the detected current values id and iq after coordinate conversion) to the voltage command value calculation unit 24.

The voltage command value calculation unit 24 calculates voltage command values vd and vq on the two rotational axes (the d and q axes) on the basis of the current command values id_ref and iq_ref calculated by the current command value calculator 21, the detected current values id and iq, the rotational angular speed ω, and the DC bus voltage Vdc.

Hereinafter, details of the voltage command value calculation unit 24 will be described.

The voltage command value calculation unit 24 includes a first deviation calculator 24a, a second deviation calculator 24b, a d-axis voltage command value calculator 24d, and a q-axis voltage command value calculator 24q.

The first deviation calculator 24a calculates a d-axis current deviation ed which is a deviation between the d-axis current command value id ref and the d-axis detected current value id. The second deviation calculator 24b calculates a q-axis current deviation eq which is a deviation between the q-axis current command value iq_ref and the q-axis detected current value iq. A value of the d-axis current deviation ed calculated by the first deviation calculator 24a is input to the d-axis voltage command value calculator 24d and the q-axis voltage command value calculator 24q. A value of the q-axis current deviation eq calculated by the second deviation calculator 24b is input to the d-axis voltage command value calculator 24d and the q-axis voltage command value calculator 24q.

The d-axis voltage command value calculator 24d calculates the d-axis voltage command value vd using the d-axis current deviation ed, the q-axis current deviation eq, the DC bus voltage Vdc, and the rotational angular speed ω. The q-axis voltage command value calculator 24q calculates the q-axis voltage command value vq using the q-axis current deviation eq, the d-axis current deviation ed, the DC bus voltage Vdc, and the rotational angular speed ω.

In this specification, the deviation between the current command value and the detected current value on the first axis of the two rotational axes may be referred to as a first deviation. Similarly, the deviation between the current command value and the detected current value on the second axis of the two rotational axes may be referred to as a second deviation. For example, when the d-axis is the first axis, the d-axis current deviation ed which is the deviation between the current command value id ref on the d-axis and the d-axis detected current value id is the "first deviation," and the q-axis current deviation eq is the "second deviation." Similarly, when the q-axis is the first axis, the q-axis current deviation eq is the "first deviation" and the d-axis current deviation ed is the "second deviation."

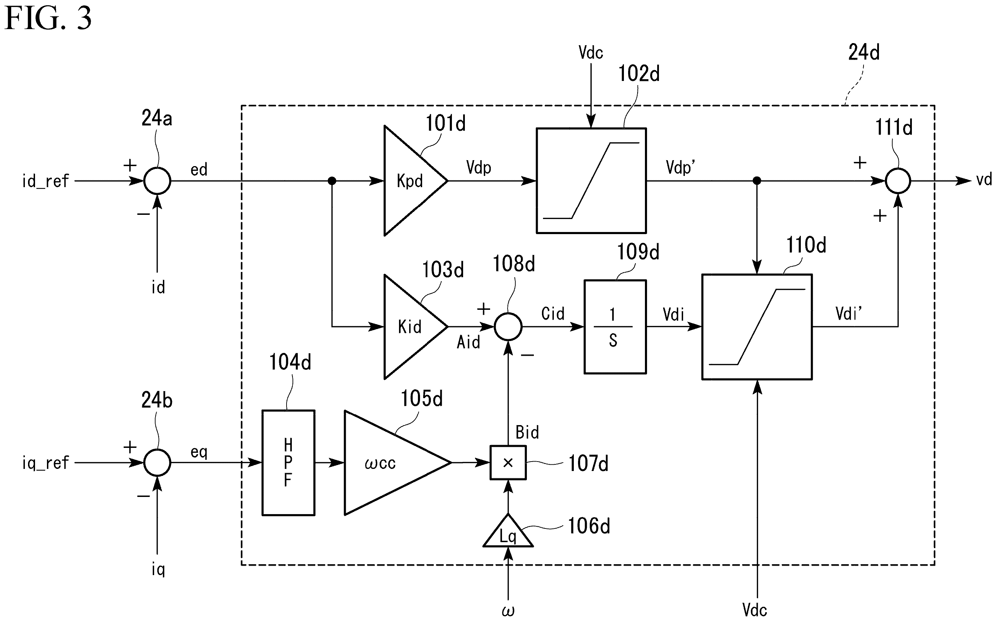

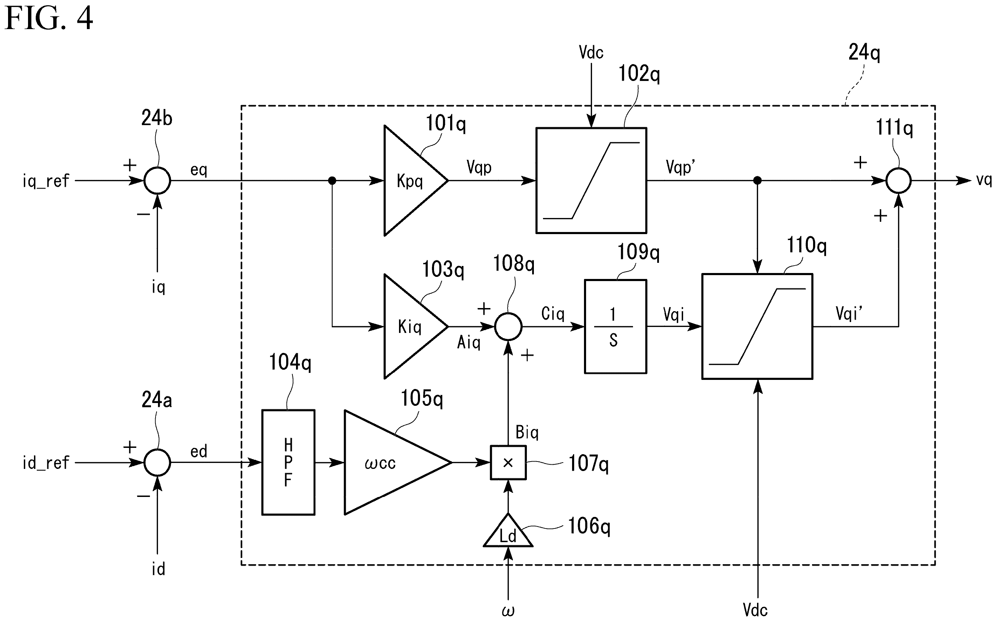

FIG. 3 shows details of the d-axis voltage command value calculator 24d, and FIG. 4 shows details of the q-axis voltage command value calculator 24q.

The d-axis voltage command value calculator 24d will be described below with reference to FIG. 3. The d-axis voltage command value calculator 24d includes a d-axis proportional amplifier 101d, a limiter 102d, a d-axis integral amplifier 103d, a high pass filter (HPF) 104d, a response angular frequency amplifier 105d, an inductance amplifier 106d, a multiplier 107d, a subtracter 108d, an integrator 109d, a limiter 110d, and an adder 111d.

The d-axis proportional amplifier 101d calculates a d-axis proportional output Vdp by multiplying the d-axis current deviation ed by Kpd. That is, $Vdp = ed \times Kpd$ is used. "Kpd" is a d-axis proportional gain that is multiplied so that an actually flowing rotating machine current has a preferable response to the current command value id_ref. For example, $Kpd = \omega cc \times Ld$ is used. Here, ωcc is a response angular frequency (more specifically, the reciprocal of a time constant of a feedback control system) for adjusting the frequency response of the rotating machine current with respect to the current command value to be within a preferable range, and Ld is a d-axis inductance of the rotating machine 10. However, a value of Kpd is not limited to $\omega cc \times Ld$, and may be adjusted as appropriate by actually measuring the responsiveness of the rotating machine current that actually flows with respect to the current command value id_ref. The d-axis proportional output Vdp calculated by the d-axis proportional amplifier 101d is input to the limiter 102d.

The limiter 102d compares the d-axis proportional output Vdp with an upper limit value (Vlimit) and a lower limit value (-Vlimit), and outputs a limited d-axis proportional output Vdp' on the basis of the comparison result. However, it is assumed that $Vlimit = Kmax \cdot Vdc/2^{0.5}$. Kmax is a maximum voltage utilization rate of the inverter 12, and is appropriately set according to a desired output. For example, Kmax may be 1.

The specific calculation performed by the limiter 102d is as follows.

(A) when Vdp<-Vlimit, Vdp'=-Vlimit
(B) when -Vlimit^Vdp^Vlimit, Vdp'=Vdp
(C) when Vlimit<Vdp, Vdp'=Vlimit

In other words, when the d-axis proportional output Vdp exceeds the upper limit value (Vlimit) or falls below the lower limit value (-Vlimit), the limiter 102d limits the value of Vdp and outputs it as a limited d-axis proportional output Vdp'. Further, when the d-axis proportional output Vdp is greater than or equal to the lower limit value and less than or equal to the upper limit value, the limiter 102d outputs the value of Vdp as it is as the limited d-axis proportional output Vdp'. The value of the limited d-axis proportional output Vdp' output by the limiter 102d is input to the limiter 110d and the adder 111d.

The d-axis integral amplifier 103d calculates a self-axis integral input Aid by multiplying the d-axis current deviation ed by Kid. That is, $Aid = ed \times Kid$ is used. "Kid" is an integral gain multiplied to set a steady-state value of the d-axis current deviation ed to zero. For example, $Kid = \omega cc \times R$ is used. Here, R is a winding resistance value of the rotating machine 10. However, the value of Kid is not limited to $\omega cc \times R$, and may be adjusted as appropriate on the basis of actual measurement results. The self-axis integral input Aid calculated by the d-axis integral amplifier 103d is input to the subtracter 108d.

The high pass filter 104d reduces a low frequency component of the q-axis current deviation eq and outputs it to the response angular frequency amplifier 105d.

The response angular frequency amplifier 105d multiplies the q-axis current deviation eq of which the low frequency component has been reduced by the high pass filter 104d by $\omega cc$, and outputs a result thereof to the multiplier 107d.

The inductance amplifier 106d multiplies the rotational angular speed $\omega$ by Lq and outputs a result thereof to the multiplier 107d. "Lq" is a value of the q-axis inductance of the rotating machine 10.

The multiplier 107d obtains the other axis integral input Bid by multiplying an output of the response angular frequency amplifier 105d and an output of the inductance amplifier 106d. The multiplier 107d outputs other axis integral input Bid to the subtracter 108d.

The subtracter 108d obtains a d-axis integral input Cid by subtracting the self-axis integral input Aid with the other axis integral input Bid. The subtracter 108d outputs the d-axis integral input Cid to the integrator 109d.

The integrator 109d performs an integral calculation on the d-axis integral input Cid, and outputs a result thereof to the limiter 110d as a d-axis integral output Vdi.

The limiter 110d compares the d-axis integral output Vdi with an upper limit value (Vlimit-Vdp') and a lower limit value (-Vlimit-Vdp'), and outputs a limited d-axis integral output Vdi' on the basis of a comparison result. The specific calculation performed by the limiter 110d is as follows.

(D) when Vdi<-Vlimit-Vdp', Vdi'=-Vlimit-Vdp'
(E) when -Vlimit-Vdp'≦Vdi≦Vlimit-Vdp', Vdi'=Vdi
(F) when Vlimit-Vdp'<Vdi, Vdi'=Vlimit-Vdp'

In other words, when the d-axis integral output Vdi exceeds the upper limit value (Vlimit-Vdp') or is less than the lower limit value (-Vlimit-Vdp'), the limiter 110d limits a value of Vdi and outputs it as the limited d-axis integral output Vdi'. Furthermore, when the d-axis integral output Vdi is greater than or equal to the lower limit value and less than or equal to the upper limit value, the limiter 110d outputs the value of Vdi as it is as the limited d-axis integral output Vdi'. The value of the limited d-axis integral output Vdi' output by the limiter 110d is input to the adder 111d.

Here, the reason why the limiter 110d makes a limitation determination using the limited d-axis proportional output Vdp' is to prevent the limited d-axis integral output Vdi' from being accumulated excessively and to obtain an anti-windup effect.

The adder 111d adds the limited d-axis proportional output Vdp' and the limited d-axis integral output Vdi' to obtain the d-axis voltage command value vd. The obtained voltage command value vd is input to the coordinate converter 25 as shown in FIG. 1.

Next, the q-axis voltage command value calculator 24q will be described using FIG. 4. The q-axis voltage command value calculator 24q includes a q-axis proportional amplifier 101q, a limiter 102q, a q-axis integral amplifier 103q, a high pass filter (HPF) 104q, a response angular frequency amplifier 105q, an inductance amplifier 106q, a multiplier 107q, an adder 108q, an integrator 109q, a limiter 110q, and an adder 111q.

The q-axis proportional amplifier 101q calculates a q-axis proportional output Vqp by multiplying the q-axis current deviation eq by Kpq. That is, Vqp=eq×Kpq is used. "Kpq" is a q-axis proportional gain that is multiplied so that an actually flowing rotating machine current has a preferable response to the current command value iq_ref. For example, Kpq=$\omega cc$×Lq is used. Here, as described above, $\omega cc$ is a response angular frequency, and Lq is a q-axis inductance. However, a value of Kpq is not limited to $\omega cc$×Lq, and may be adjusted as appropriate by actually measuring the responsiveness of the rotating machine current that actually flows with respect to the current command value iq_ref. The q-axis proportional output Vqp calculated by the q-axis proportional amplifier 101q is input to the limiter 102q.

The limiter 102q compares the q-axis proportional output Vqp with an upper limit value (Vlimit) and a lower limit value (-Vlimit), and outputs a limited q-axis proportional output Vqp' on the basis of the comparison result. The specific calculation performed by the limiter 102q is as follows.

(G) when Vqp<-Vlimit, Vqp'=-Vlimit
(H) When -Vlimit^Vqp^Vlimit, Vqp'=Vqp
(I) When Vlimit < Vqp, Vqp'=Vlimit

In other words, when the q-axis proportional output Vqp exceeds the upper limit value (Vlimit) or falls below the lower limit value (-Vlimit), the limiter 102q limits the value of Vqp and outputs it as a limited q-axis proportional output Vqp'. Further, when the q-axis proportional output Vqp is greater than or equal to the lower limit value and less than or equal to the upper limit value, the limiter 102q outputs the value of Vqp as it is as the limited q-axis proportional output Vqp'. The value of the limited q-axis proportional output Vqp' output by the limiter 102q is input to the limiter 110q and the adder 111q.

The q-axis integral amplifier 103q calculates a self-axis integral input Aiq by multiplying the q-axis current deviation eq by Kiq. That is, Aiq=eq×Kiq is used. Here, Kiq is an integral gain multiplied to set a steady-state value of the q-axis current deviation eq to zero. For example, Kiq=$\omega cc$×R is used. However, the value of Kiq is not limited to $\omega cc$×R, and may be adjusted as appropriate on the basis of actual measurement results. The self-axis integral input Aiq calculated by the q-axis integral amplifier 103q is input to the adder 108q.

The high pass filter 104q reduces a low frequency component of the d-axis current deviation ed and outputs it to the response angular frequency amplifier 105q.

The response angular frequency amplifier 105q multiplies the d-axis current deviation ed of which the low frequency component has been reduced by the high pass filter 104q by ωcc, and outputs a result thereof to the multiplier 107q.

The inductance amplifier 106q multiplies the rotational angular speed ω by Ld and outputs a result thereof to the multiplier 107d.

The multiplier 107q obtains the other axis integral input Biq by multiplying an output of the response angular frequency amplifier 105d and an output of the inductance amplifier 106d. The multiplier 107q outputs other axis integral input Biq to adder 108q.

The adder 108q obtains a q-axis integral input Ciq by adding the self-axis integral input Aiq and the other-axis integral input Biq. The adder 108q outputs the q-axis integral input Ciq to integrator 109q.

The integrator 109q performs an integral calculation on the q-axis integral input Ciq, and outputs a result thereof to the limiter 110q as a q-axis integral output Vqi.

The limiter 110q compares the q-axis integral output Vqi with an upper limit value (Vlimit-Vqp') and a lower limit value (-Vlimit-Vqp'), and outputs a limited q-axis integral output Vqi' on the basis of a comparison result. The specific calculation performed by the limiter 110q is as follows.

(J) when Vqi<-Vlimit-Vqp', Vqi'=-Vlimit-Vqp'
(K) when - Vlimit-Vqp'≦Vdi≦Vlimit-Vqp', Vqi'=Vqi
(L) when Vlimit-Vqp' < Vqi, = Vlimit-Vqp'

In other words, when the q-axis integral output Vqi exceeds the upper limit value (-Vlimit-Vqp') or is less than the lower limit value (Vlimit-Vqp'), the limiter 110q limits a value of Vqi and outputs it as the limited q-axis integral output Vqi'. Furthermore, when the q-axis integral output Vqi is greater than or equal to the lower limit value and less than or equal to the upper limit value, the limiter 110q outputs the value of Vqi as it is as the limited q-axis integral output Vqi'. A value of the limited q-axis integral output Vqi' output by the limiter 110q is input to the adder 111q.

Here, the reason why the limiter 110q makes a limitation determination using the limited q-axis proportional output Vqp' is to prevent the limited q-axis integral output Vqi' from being accumulated excessively and to obtain an anti-windup effect.

The adder 111q adds the limited q-axis proportional output Vqp' and the limited q-axis integral output Vqi' to obtain the q-axis voltage command value vq. The obtained voltage command value vq is input to the coordinate converter 25.

As shown in FIG. 1, the voltage command values vd and vq on the two rotational axes (the d and q axes) and the rotor position θ are input to the coordinate converter 25. The coordinate converter 25 coordinately transforms the voltage command values vd and vq on the basis of the rotor position θ, and calculates the voltage command values vu, vv, and vw on three-phase coordinates.

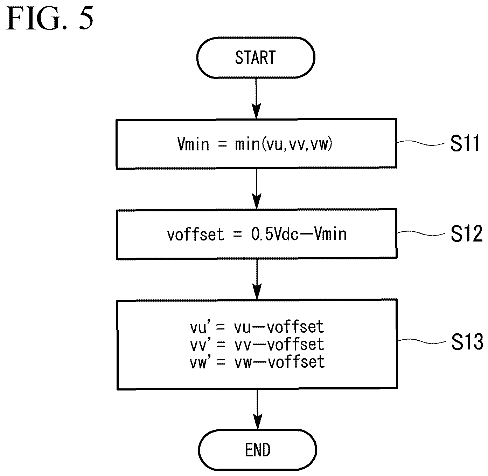

The corrected voltage generator 26 generates corrected voltage command values vu', vv', and vw' on the basis of the voltage command values vu, vv, and vw output from the coordinate converter 25 and the offset voltage voffset. FIG. 5 is a flowchart showing a process performed by the corrected voltage generator 26 in the first embodiment.

When the process of the flowchart shown in FIG. 5 is started, Step S11 is first performed. In Step S11, the corrected voltage generator 26 selects the smallest value from among the voltage command values vu, vv, and vw, and sets that value as Vmin.

Next, in Step S12, the corrected voltage generator 26 sets a value of the offset voltage voffset to 0.5Vdc-Vmin.

Next, in Step S13, the corrected voltage generator 26 obtains corrected voltage command values vu', vv', and vw' by subtracting the offset voltage voffset from each of the voltage command values vu, vv, and vw.

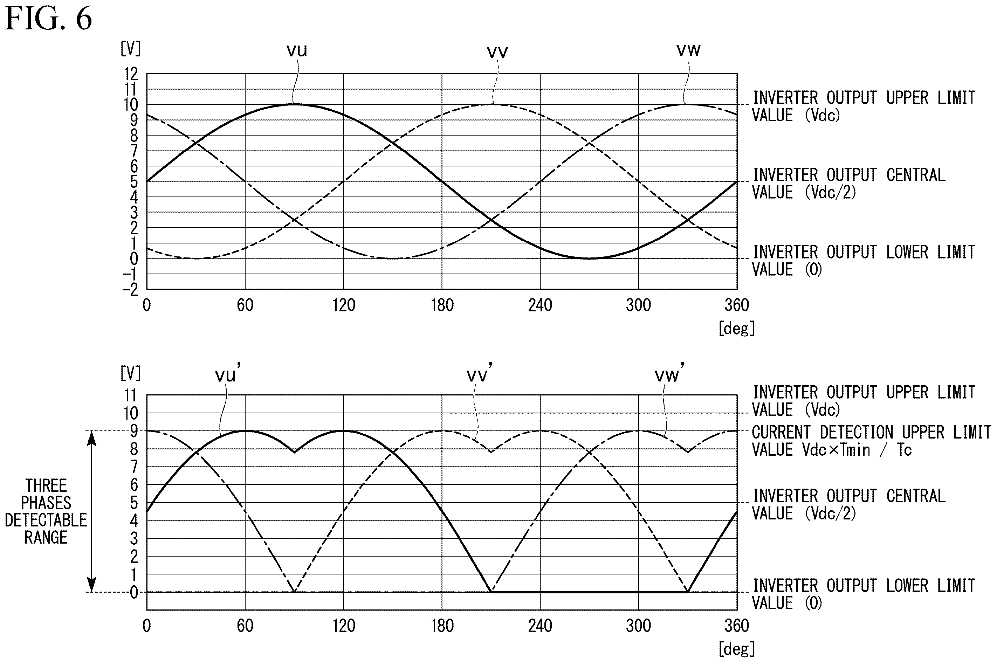

FIG. 6 is a diagram showing an example of waveforms of the voltage command values vu, vv, and vw and the corrected voltage command values vu', vv', and vw' in the first embodiment. In FIG. 6, a waveform graph of the voltage command values vu, vv, and vw is shown on the upper side, and a waveform graph of the corrected voltage command values vu', vv', and vw' is shown on the lower side. However, in each of the graphs shown in FIG. 6, the DC bus voltage Vdc=10 V. Here, a voltage range that the inverter 12 can output is from 0 (a minimum value of the carrier triangular wave C) to Vdc (a maximum value of the carrier triangular wave C). Therefore, when the DC bus voltage Vdc=10 V, the voltage range that the inverter 12 can output is 0V to 10V, as shown in FIG. 6.

As shown in the lower graph of FIG. 6, the minimum value among the corrected voltage command values vu', vv', and vw' always matches an inverter output lower limit value by performing the processes as in Steps S11 to S13 shown in FIG. 5. This means that the corrected voltage command values vu', vv', and vw' are offset downward equally to the three phases as much as possible within a range that does not cause voltage saturation, and the ON time of the lower arm switching elements Sun, Svn, and Swn is made as long as possible. This point is advantageous from the viewpoint of current detection in an inverter including the shunt resistors Ru, Rv, and Rw in series with respect to the lower arm switching elements Sun, Svn, and Swn, as in this embodiment.

The calculation method of the offset voltage voffset is not limited to the method described above. For example, in Step S 11 of FIG. 5, in addition to the process of selecting the smallest value from the voltage command values vu, vv, and vw and setting it to Vmin, a process of selecting the largest value from the voltage command values vu, vv, and vw and setting it as Vmax may be performed. Then, in Step S12, a process of setting voffset to "(Vmax+Vmin)/2" may be performed. A method for making voffset=(Vmax+Vmin)/2 in this way is referred to as third harmonic addition or an HIP modulation. Furthermore, so-called two-phase modulation that always keeps the upper arm switching element corresponding to the phase with the maximum voltage command value among the three phases in the ON state may be adopted.

The corrected voltage command values vu', vv', and vw' generated by the corrected voltage generator 26 through the above calculations are input to the PWM signal generator 27. Then, the PWM signal generator 27 performs PWM modulation on the corrected voltage command values vu', vv', and vw', and outputs results thereof to the inverter 12 as switching signals Gup to Gwn.

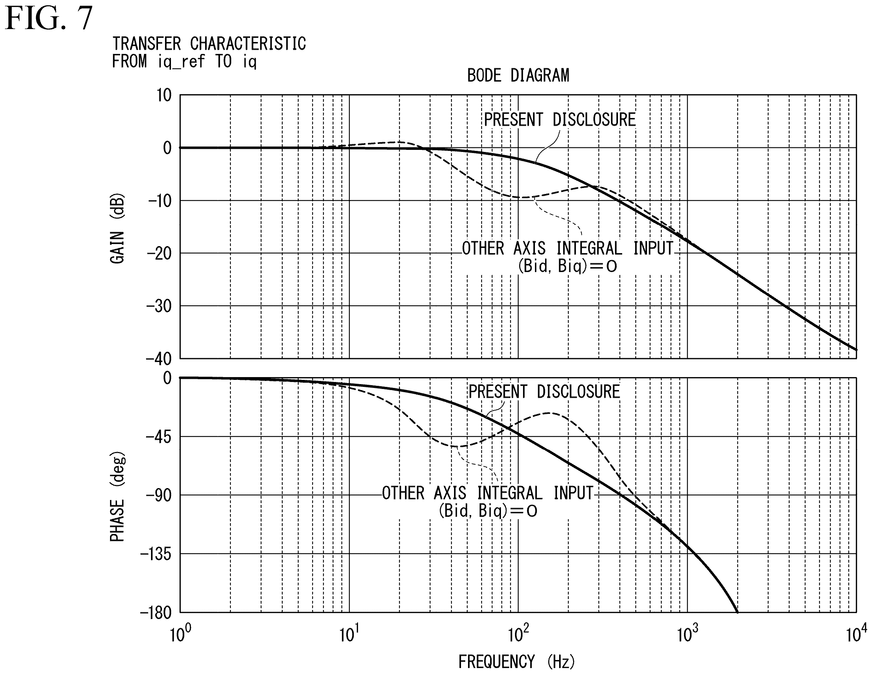

FIG. 7 is a Bode diagram showing a transfer characteristic from the q-axis current command value iq_ref to the q-axis detected current value iq when the rotational angular speed ω is high in the control device 1 according to the first embodiment. In FIG. 7, a gain diagram is shown on the upper side, and a phase diagram is shown on the lower side. In both the gain diagram and the phase diagram, "the present disclosure" indicates the transfer characteristic according to the first embodiment, and "other axis integral input (Bid, Biq)=0" is a characteristic when 0 (zero) is forcibly input as the values of Bid and Biq (refer to FIGS. 3 and 4).

As shown in the gain diagram of FIG. 7, "other axis integral inputs (Bid, Biq)=0" has a drop in gain near 100 Hz. On the other hand, in "the present disclosure," there is no drop near 100 Hz, and ideal first-order lag system transfer characteristics are obtained. That is, according to the control device 1 according to the present disclosure, it is possible to obtain suitable control results even when the rotational angular speed ω is high.

Further, the number of integrators included in each of the d-axis voltage command value calculator 24d and the q-axis voltage command value calculator 24q in the present disclosure is one. Therefore, anti-windup processing can be performed more easily than a case in which two integrators are used for one axis as in Patent Document 1. As a result, even when there is a sharp change in the current command values id_ref and iq_ref, it is possible to provide a stable control device 1 in which overshoot due to excessive accumulation of integral values is unlikely to occur. Further, according to the present disclosure, it is also possible to suppress an amount of calculation by the controller 13 compared to the case in which two integrators are used for one axis.

As described above, the control device 1 according to the first embodiment includes the inverter 12 that applies a voltage to the AC rotating machine 10, the current detector 22 that detects the rotating machine current flowing through the rotating machine 10, the d-axis voltage command value calculator 24d (the first axis voltage command value calculator) that calculates a voltage command value vd of the d-axis (the first axis) of the two rotational axes of the rotating machine 10, and the q-axis voltage command value calculator 24q (the second axis voltage command value calculator) that calculates a voltage command value vq of the q-axis (the second axis) of the two rotational axes. The d-axis voltage command value calculator 24d performs an integral calculation using the d-axis current deviation ed (the first deviation) which is the deviation between the current command value id_ref on the d-axis and the detected current value id on the d-axis and the q-axis current deviation eq (second deviation) which is the deviation between the current command value iq_ref on the q-axis and the q-axis detected current value iq on the q-axis. The q-axis voltage command value vq is calculated on the basis of the result of the integral calculation. Further, the q-axis voltage command value calculator 24q performs an integral calculation using the q-axis current deviation eq and the d-axis current deviation ed, and calculates the q-axis voltage command value vq on the basis of the result of the integral calculation.

With such a configuration, it becomes possible to reduce the number of integrators required to calculate the voltage command values vd and vq, and as a result, anti-windup can be easily performed. Thus, it is possible to provide a control device 1 that is less likely to cause overshoot or the like and can perform more stable control.

Further, the d-axis voltage command value calculator 24d performs the integral calculation using a value obtained by multiplying the q-axis current deviation eq by the rotational angular speed ω of the AC rotating machine, the q-axis inductance Lq, and the response angular frequency ωcc for adjusting the frequency response of the rotating machine current to the current command value. Thus, a desired frequency response can be obtained without depending on the rotational angular speed ω of the rotating machine. Similarly, the q-axis voltage command value calculator 24q performs the integral calculation using a value obtained by multiplying the d-axis current deviation ed by the rotational angular speed ω of the AC rotating machine, the inductance Ld on the d-axis, and the response angular frequency ωcc for adjusting the frequency response of the rotating machine current to the current command value.

Further, the d-axis voltage command value calculator 24d performs the integral calculation using the result of reducing the low frequency component of the q-axis current deviation eq by the high pass filter 104d. In this way, the current deviation ed in the axis to be controlled (that is, the d-axis) can be constantly set to 0 (zero) by reducing the low frequency component of the current deviation eq of the axis that is not to be controlled by the d-axis voltage command value calculator 24d (that is, the q-axis). Similarly, the q-axis voltage command value calculator 24q performs the integral calculation using the result of reducing the low frequency component of the d-axis current deviation ed by the high pass filter 104q.

Second embodiment

Next, a second embodiment of the present disclosure will be described, but the basic configuration is the same as that of the first embodiment. Therefore, descriptions of parts that overlap those in the first embodiment will be omitted, and differences will mainly be described.

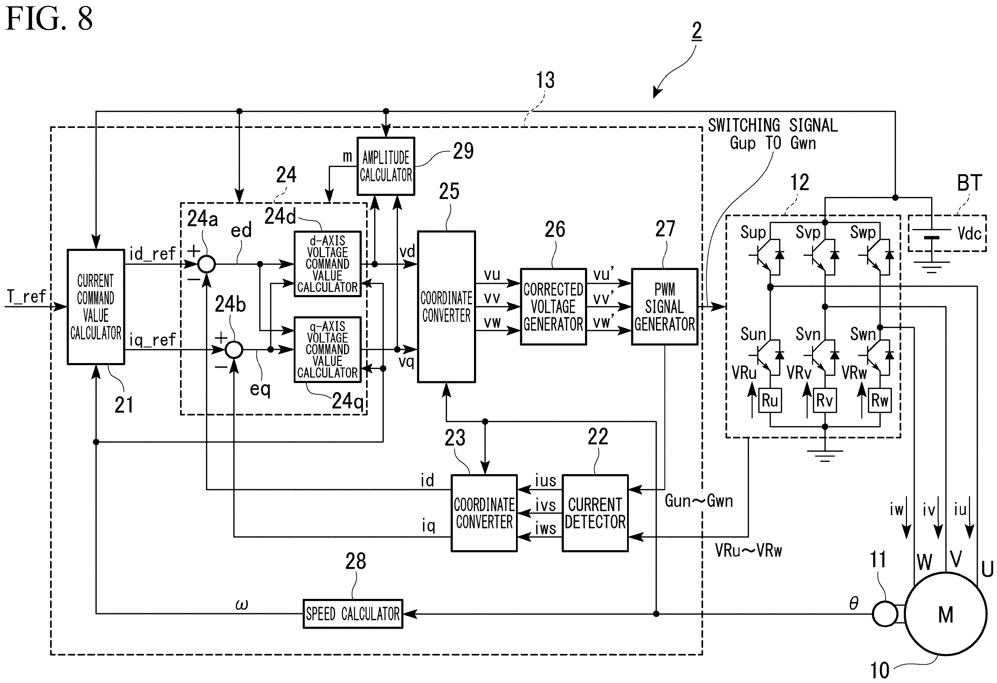

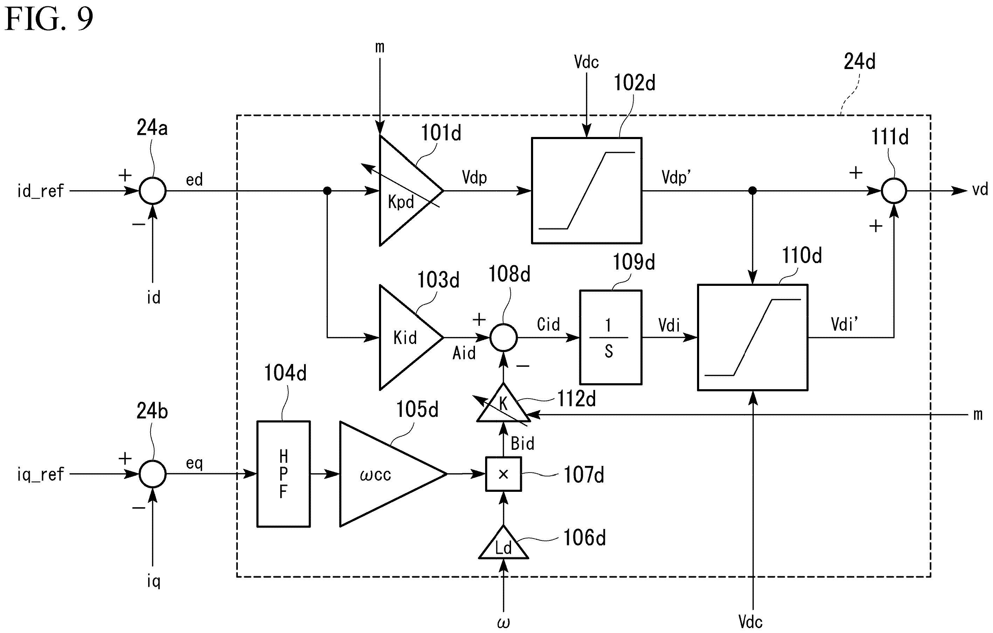

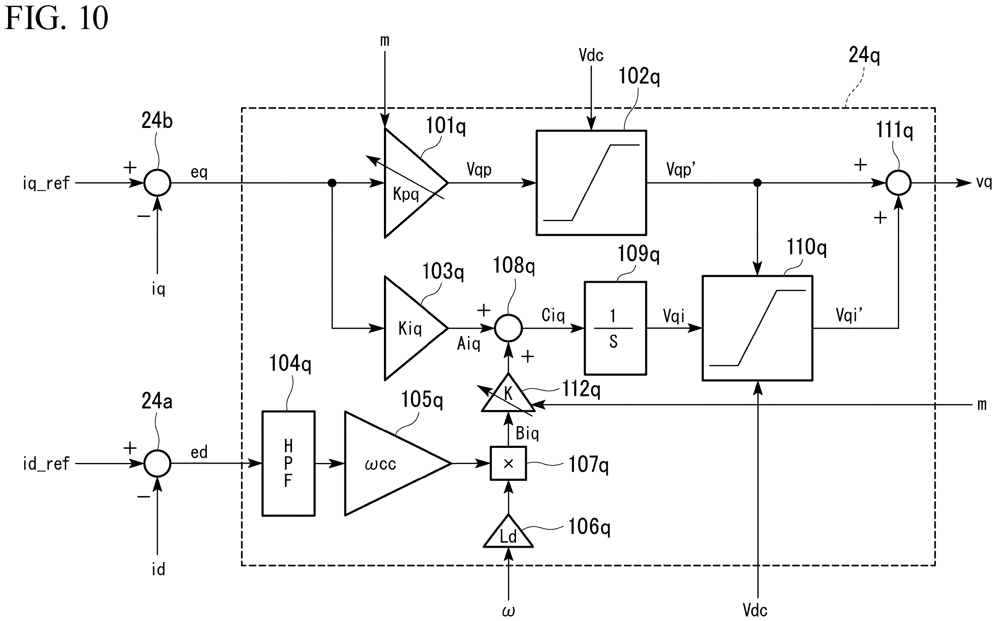

FIG. 8 is a block diagram showing a schematic configuration of a control device 2 of a rotating machine according to the second embodiment. As shown in FIG. 8, the control device 2 differs from the control device 1 according to the first embodiment in that it includes an amplitude calculator 29. Further, FIGS. 9 and 10 are block diagrams respectively showing configurations of a d-axis voltage command value calculator 24d and a q-axis voltage command value calculator 24q according to the second embodiment. The configurations of the d-axis voltage command value calculator 24d and the q-axis voltage command value calculator 24q are also different between the first embodiment and the second embodiment.

As shown in FIG. 8, a d-axis voltage command value vd, a q-axis voltage command value vq, and a DC bus voltage Vdc are input to the amplitude calculator 29. The amplitude calculator 29 calculates a voltage amplitude m based on the following Equation (2-1). The voltage amplitude m is a value obtained by standardizing magnitudes of the d-axis voltage command value vd and the q-axis voltage command value vq using the DC bus voltage Vdc of the inverter 12.

$$m = \{(vd^2+vq^2)/(Vdc/2)\}^{0.5} \quad ...(2\text{-}1)$$

As shown in FIG. 9, the d-axis voltage command value calculator 24d includes an amplifier 112d. The amplifier 112d multiplies an output from the multiplier 107d by K and inputs a result thereof to the subtracter 108d. "K" is a limit gain that is multiplied when integrating and inputting the current deviation eq on the q-axis which is not to be controlled as seen from the d-axis voltage command value calculator 24d. The voltage amplitude m is input to the amplifier 112d, and a value of the limit gain K is determined on the basis of a value of the voltage amplitude m. In the d-axis voltage command value calculator 24d according to this embodiment, the voltage amplitude m is also input to the d-axis proportional amplifier 101d. This embodiment differs from the first embodiment in that the d-axis proportional gain Kpd and the limit gain K are varied in accordance with the voltage amplitude m.

As shown in FIG. 10, the q-axis voltage command value calculator 24q of the second embodiment includes an amplifier 112q. The amplifier 112q multiplies an output from multiplier 107q by K and inputs a result thereof to an adder 108q. "K" is a limit gain multiplied when integrating and inputting the current deviation ed on the d-axis which is not to be controlled as seen from the q-axis voltage command value calculator 24q. The voltage amplitude m is input to the amplifier 112q, and the value of the limit gain K is determined on the basis of the value of the voltage amplitude m. In the q-axis voltage command value calculator 24q according to this embodiment, the voltage amplitude m is also input to the q-axis proportional amplifier 101q. This embodiment differs from the first embodiment in that the q-axis proportional gain Kpq and the limit gain K are varied in accordance with the voltage amplitude m.

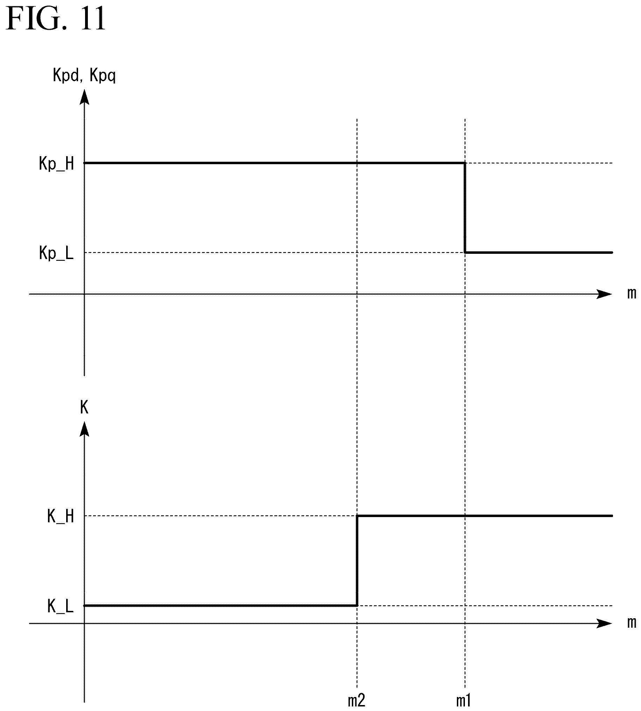

FIG. 11 shows a relationship between the voltage amplitude m, the proportional gains Kpd and Kpq, and the limit gain K. The vertical axis of the upper graph in FIG. 11 is the proportional gains Kpd and Kpq, and the vertical axis of the lower graph is the limit gain K. Both on the upper and lower sides, the horizontal axis is the voltage amplitude m. In FIG. 11, m1 is a first voltage threshold value, and m2 is a second voltage threshold value.

The proportional gains Kpd and Kpq are switched between a first proportional value Kp_H and a second proportional value Kp_L. The second proportional value Kp_L is smaller than the first proportional value Kp_H.

The limit gain K is switched between a first limit value K_H and a second limit value K_L. The second limit value K_L is smaller than the first limit value K_H.

As shown in FIG. 11, when the voltage amplitude m is higher than the first voltage threshold value m1, the values of the proportional gains Kpd and Kpq are set to the second proportional value Kp_L. Further, when the voltage amplitude m is lower than the first voltage threshold value m1, the proportional gains Kpd and Kpq are set to the first proportional value Kp_H.

When the voltage amplitude m is higher than the second voltage threshold value m2, the limit gain K is set to the first limit value K_H. Further, when the voltage amplitude m is lower than the second voltage threshold value m2, the limit gain K is set to the second limit value K_L. Here, the first voltage threshold value m1 is higher than the second voltage threshold value m2. Therefore, when the values of the proportional gains Kpd and Kpq are Kp_L, the value of limit gain K is K_H.

In this way, by processing to reduce the proportional gains Kpd and Kpq only when the limit gain K is the high value K_H (that is, in a state in which non-interference control between the d and q axes is sufficiently effective), control stability can be ensured even in a state in which the proportional gains Kpd and Kpq are low. In addition, when the limit gain K is the low value K_L, the proportional gains Kpd and Kpq are set to the value Kp_H which is high enough to ensure stability in order to ensure the control stability even in a state in which the non-interference control between the d and q axes is insufficient. Specifically, the values of Kp_H and Kp_L are set so that the response from the current command values id_ref and iq_ref to the rotating machine currents iu, iv, and iw is good within ranges of 300Hz to 1000Hz and 100Hz to 300Hz, respectively. For example, the value of K_H is set to 0.7 or more, and the value of K_L is set to 0.3 or less.

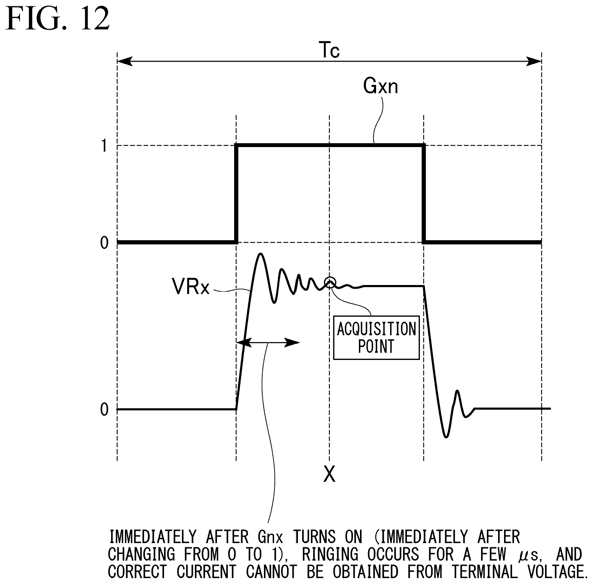

Next, a preferred setting of the first voltage threshold value m1 will be described. Gxn shown in FIG. 12 indicates an example of a waveform of any one of the switching signals Gun, Gvn, and Gwn in the lower arm switching elements Sun, Svn, and Swn. Further, VRx indicates an example of a waveform of any one of the terminal voltages VRu, VRv, and VRw of the shunt resistors Ru, Rv, and Rw. In the example shown in FIG. 12, ringing occurs in the terminal voltage VRx of the shunt resistor for a few μs after the signal Gxn changes from 0 to 1. The ringing is a phenomenon in which the terminal voltage of the shunt resistor fluctuates for a certain period of time when switching is performed in the inverter 12. When the current detector 22 obtains the pre-conversion detected currents ius, ivs, and iws on the basis of the terminal voltages VRu, VRv, and VRw of the shunt resistors that include such ringing, detected results will include errors. When the pre-conversion detected currents ius, ivs, and iws include errors, the detected current values id and iq after coordinate conversion also include errors.

In order to accurately obtain the pre-conversion detected currents ius, ivs, and iws, preferably, ON time of the corresponding lower arm switching elements Sun, Svn, and Swn is longer than a time threshold value Tmin that is set according to a ringing convergence time. In order to make the ON time of the lower arm switching elements Sun, Svn, and Swn longer than the time threshold value Tmin, preferably, the voltage input to the PWM signal generator 27 is equal to or less than Vdc×(Tc-Tmin)/Tc shown by the dotted and dashed line in FIG. 2.

In FIG. 2, the corrected voltage commands vu', vv', and vw' (that is, the voltages input to the PWM signal generator 27) are all equal to or less than Vdc×(Tc-Tmin)/Tc. Therefore, it is possible to eliminate errors due to ringing and to accurately obtain the pre-conversion detected currents ius, ivs, and iws on the basis of the terminal voltages VRu, VRv, and VRw of the shunt resistors. The detection method for obtaining the pre-conversion detected currents ius, ivs, and iws based on the terminal voltages VRu, VRv, and VRw of the shunt resistors respectively corresponding to the three phases in this way is called "three phase detection."

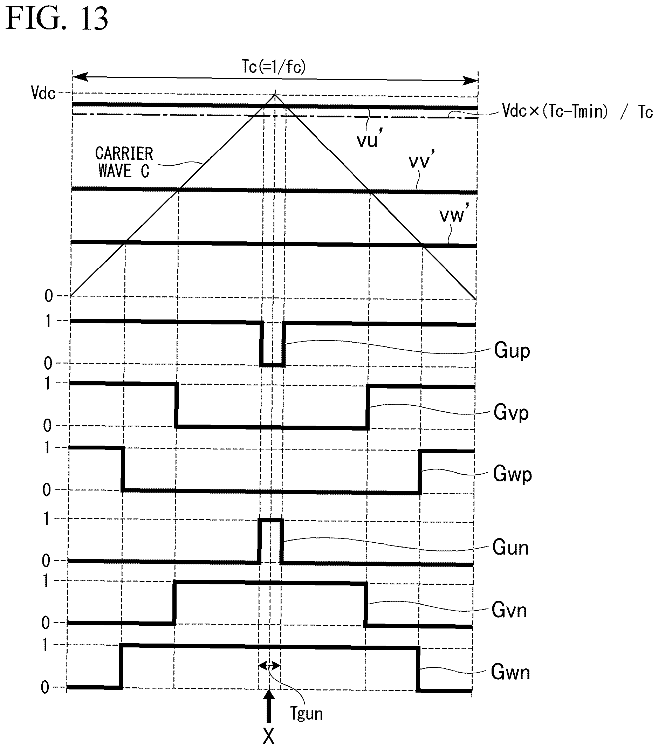

However, when the voltage amplitude m increases due to an increase in the rotational speed of the rotating machine 10, some of the corrected voltage commands vu', vv', and vw' may take large values close to the maximum value Vdc of the carrier triangular wave C. In the example of FIG. 13, the value of the corrected voltage command vu' is larger than the value of Vdc×(Tc-Tmin)/Tc (hereinafter, also referred to as an "upper limit value"). In this case, a difference between a time when Gun switches from 0 to 1 and a time at timing X becomes small. Therefore, the terminal voltage VRu of the u-phase shunt resistor obtained at the timing X includes the influence of ringing.

Therefore, the pre-conversion detected current for a phase in which the ON time of the switching signals Gun, Gvn, and Gwn of the lower arm switching elements is shorter than the time threshold value Tmin may be generated from the other two phases. Such a detection method in which the pre-conversion detected current of one of the three phases is obtained on the basis of the pre-conversion detected currents of the remaining two phases is referred to as a "two-phase detection." For example, when the ON time of the switching signal Gun is shorter than the time threshold value Tmin, the pre-conversion detected current ius of the U-phase may be calculated by ius=-ivs-iws. Similarly, when the ON time of the switching signal Gvn is shorter than the time threshold value Tmin, the calculation may be performed as ivs=-ius-iws, and when the ON time of the switching signal Gwn is shorter than the time threshold value Tmin, the calculation may be performed as iws=-ius-ivs.

The relationship between the number of phases used for current detection and the voltage amplitude m is as follows. That is, when the voltage amplitude m is low, and instantaneous values of the corrected voltage commands vu', vv', and vw' of the three phases are all equal to or less than the upper limit value (Vdc×(Tc-Tmin)/Tc), the "three detection" is used. Alternatively, when the voltage amplitude m is high and the instantaneous value of any one of the corrected voltage commands vu', vv', and vw' of the three phases is equal to or more than the upper limit value (Vdc×(Tc-Tmin)/Tc), the "two-phase detection" is used. Here, when the "three phase detection" and the "two phase detection" are compared, the "three phase detection" has better accuracy. Therefore, in order to improve the control accuracy of the rotating machine 10, preferably, the "three phase detection" is used as much as possible. However, from the viewpoint of increasing the output of the rotating machine 10, it may be preferable to increase the voltage amplitude m and to use the "two phase detection."

Therefore, in this embodiment, the value of the first voltage threshold value m1 is set to "(Tc-Tmin)/Tc." It can be said that "(Tc-Tmin)/Tc" is a value obtained by dividing the above-described upper limit value "Vdc×(Tc-Tmin)/Tc" by Vdc and standardizing it. By setting the first voltage threshold value m1 in this way, the following effects can be obtained. When the voltage amplitude m is larger than the first voltage threshold value m1, the "two-phase detection" is used, and at that time, the proportional gains Kpd and Kpq are set to a low value Kp_L. Thus, the influence of a decrease in current detection accuracy can be reduced, and vibrations and noises generated from the rotating machine 10 can be prevented from increasing. At the same time, since the limit gain K is set to a high value K_H, the non-interference control is effective, and the control stability is maintained. Furthermore, when the voltage amplitude m is smaller than the first voltage threshold value m1, the "three-phase detection" is used, and at that time, the proportional gains Kpd and Kpq are set to a large value Kp_H (refer to FIG. 11). Since the current detection accuracy is good in the three phase detection, dependence on the non-interference control is reduced. Thus, it is possible to reduce vibrations and noises generated in the rotating machine 10 due to noise included in the rotational angular speed ω.

The second voltage threshold value m2 may be set to a value lower than the first voltage threshold value m1. However, when the noise included in the detected value of the rotational angular speed ω is not a problem, switching of the value of the limit gain K at the second voltage threshold value m2 is not necessarily necessary. Specifically, when the voltage amplitude m is equal to or greater than the first voltage threshold value m1, the values of the proportional gains Kpd and Kpq may be set to Kp_L, otherwise the values of the proportional gains Kpd and Kpq may be set to Kp_H, and the value of the limit gain K may be set to be constant (K_H) regardless of the voltage amplitude m.

In general, the voltage applied to the rotating machine and the rotational speed (or the rotational angular speed ω) of the rotating machine including the AC rotating machine 10 according to this embodiment are generally in a proportional relationship. Therefore, switching of the proportional gains Kpd and Kpq and the limit gain K may be performed using a threshold value related to the rotational speed (or the rotational angular speed ω) instead of the previously described threshold value related to the voltage amplitude m. For example, the rotational speed when the voltage amplitude m coincides with the first voltage threshold value m1 may be set as the first rotational speed threshold value n1, and the rotational speed when the voltage amplitude m matches the second voltage threshold value m2 may be set as the second rotational speed threshold value n2. In this case, the switching of the proportional gains Kpd and Kpq or the limit gain K based on the comparison between the voltage amplitude m and the threshold values m1 and m2 can be replaced with switching based on the comparison between the rotational speed and the threshold values n1 and n2. Similarly, the rotational angular speed ω when the voltage amplitude m coincides with the first voltage threshold value m1 may be set to a first rotational angular speed threshold value ω1, and the rotational angular speed ω when the voltage amplitude m coincides with the second voltage threshold value m2 may be set as a second rotational angular speed threshold value ω2. In this case, the switching of the proportional gains Kpd and Kpq or the limit gain K based on the comparison between the voltage amplitude m and the threshold values m1 and m2 described above can be replaced with switching based on the comparison of the rotational angular speed ω and the ω1 and ω2.

Alternatively, switching according to the voltage amplitude m and switching according to the rotational speed (or the rotational angular speed ω) may be used together. As a specific example, switching of the proportional gains Kpd and Kpq may be performed on the basis of the comparison between the voltage amplitude m and the first voltage threshold value m1, and switching of the limit gain K may be performed on the basis of the comparison between the rotational speed (or the rotational angular speed ω) and the second rotational speed threshold value n2 (or the second rotational angular speed threshold value ω2).

In the above description, it has been described that the values of the proportional gains Kpd and Kpq are switched on the basis of the comparison between the voltage amplitude m and the first voltage threshold value m1, the comparison between the rotational speed and the first rotational speed threshold value n1, or the comparison between the rotational angular speed ω and the first rotational angular speed threshold value ω1. However, for example, when the rotating machine current becomes excessive and exceeds the threshold value, the values of the proportional gains Kpd and Kpq may be kept constant at Kp_H regardless of the voltage amplitude m or the rotational speed. When the rotating machine current becomes excessive, the state in which the rotating machine current becomes excessive can be shortened by setting the proportional gains Kpd and Kpq to large values. Thus, failure of the control device of the rotating machine 10 can be prevented.

In addition, when a failure occurs in a part of the control device of the rotating machine 10 and the remaining non-failure parts continue to operate, the proportional gains Kpd and Kpq may be always set to a large value (Kp_H) to enhance stability of the system.

Furthermore, when the values of the proportional gains Kpd and Kpq are switched between Kp_L and Kp_H, the values may be switched gradually with a slope so that the control does not become discontinuous. Similarly, when the value of the limit gain K is switched between K_L and K_H, it may be changed gradually with a slope.

As described above, in the second embodiment, the first axis voltage command value calculator (for example, the d-axis voltage command value calculator 24d) calculates the first axis voltage command value (for example, Vd) using a value obtained by multiplying the first deviation (for example, the d-axis current deviation ed) by a proportional gain (for example, Kpd). The proportional gain is switched between a first proportional value Kp_H and a second proportional value Kp_L that is smaller than the first proportional value Kp_H. When the voltage amplitude m calculated on the basis of the voltage command value is equal to or greater than the first voltage threshold value m1, or when the rotational speed of the AC rotating machine 10 is equal to or greater than the first rotational speed threshold value n1, or when the rotational angular speed ω of the AC rotating machine 10 is equal to or greater than the first rotational angular speed threshold value ω1, the proportional gain is set to the second proportional value Kp_L. According to such a configuration, a high frequency noise component included in the first deviation can be reduced, and the control device 2 of the AC rotating machine 10 with low noise can be provided by setting the proportional gain to a small value (Kp_L) when the rotational angular speed ω is large.

Further, in the second embodiment, the first axis voltage command value calculator performs an integral calculation using a value obtained by multiplying the second deviation by the limit gain K, and the limit gain K is switched between a first limit value K H and a second limit value K_L that is smaller than the first limit value K_H. When the voltage amplitude m is equal to or less than the second voltage threshold value m2 which is smaller than the first voltage threshold value m1, or when the rotational speed of the AC rotating machine 10 is equal to or lower than the second rotational speed threshold value n2 which is smaller than the first rotational speed threshold value n1, or when the rotational angular speed ω of the AC rotating machine 10 is equal to or less than the second rotational angular speed threshold value ω2 which is smaller than the first rotational angular speed threshold value ω1, the limit gain K is set to the second limit value K_L. According to such a configuration, the input of the second deviation to the integral calculation can be limited to a small value by setting the limit gain to a small value (K_L) when the rotational angular speed ω is small. Therefore, the high frequency noise component included in the second deviation can be reduced, and the control device 2 of the AC rotating machine 10 with low noise can be provided.

Further, the inverter 12 includes three sets of upper arm switching elements Sup, Svp, and Swp, lower arm switching elements Sun, Svn, and Swn and shunt resistors Ru, Rv, and Rw which are respectively corresponding to three phases (U, V, and W). When the voltage amplitude m is smaller than the first voltage threshold value m1, the current detector 22 detects the rotating machine currents iu, iv, and iw in the three phases on the basis of the terminal voltages VRu, VRv, and VRw of the respective corresponding shunt resistors (that is, the "three phase detection" is used). According to such a configuration, it is possible to suppress the detection results of the rotating machine currents iu, iv, and iw from including errors due to the influence of ringing. Therefore, the AC rotating machine 10 can be controlled with high precision.

Further, when the rotating machine current exceeds a threshold value (that is, when it is excessive), the proportional gains Kpd and Kpq may be set to the first proportional value Kp_H regardless of the voltage amplitude m, or the like. In this case, a time period during which the rotating machine current remains excessively high can be shortened. Therefore, failure of the control device 2 can be prevented.

Further, in a case in which a failure occurs in at least one location in the control device 2, the proportional gains Kpd and Kpq may be set to the first proportional value Kp_H regardless of the voltage amplitude m, or the like. In this case, it is possible to improve the stability of the system when a failure occurs and to suppress occurrence of a secondary failure.

Third embodiment

Next, a third embodiment will be described. In this embodiment, a case in which the technology described in the first or second embodiment is applied to control of a rotating machine included in an electric power steering device will be described.

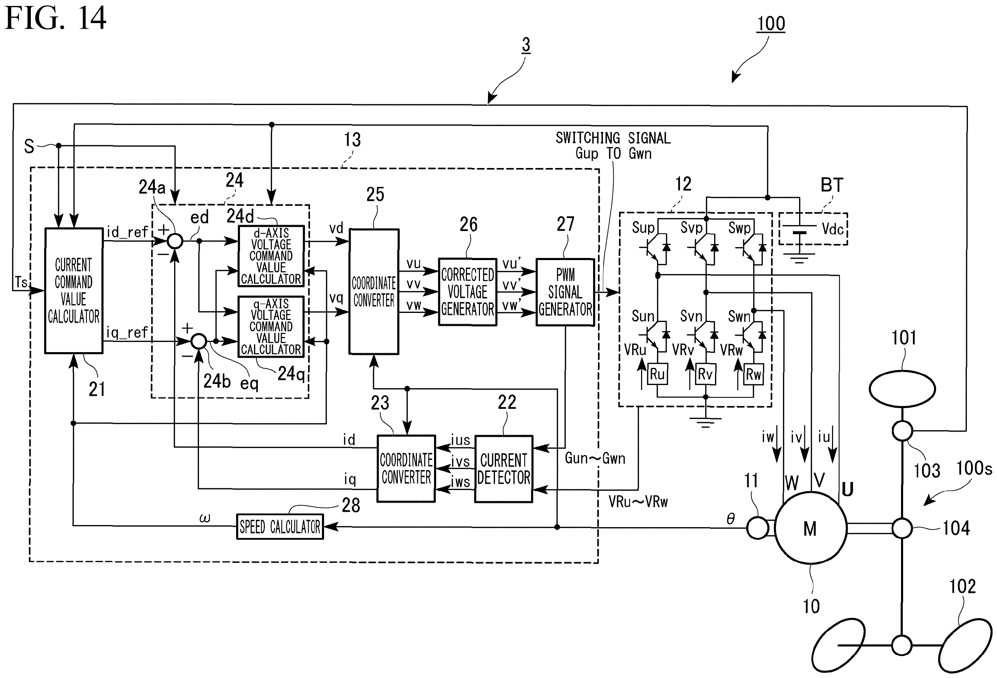

As shown in FIG. 14, an electric power steering device 100 according to this embodiment includes a control device 3, a handle 101, a rotating machine 10, and a torque detector 103. The electric power steering device 100 is mounted in a vehicle. The handle 101 is operated by a driver. By operating the handle 101, front wheels 102 of the vehicle are driven. Since a basic configuration of the control device 3 is the same as that of the control device 1 in the first embodiment, a detailed description will be omitted, and the different points will mainly be described.

The torque detector 103 detects a steering torque Ts of the handle 101 by the driver, and outputs a detection result to the control device 3. A driving force of the rotating machine 10 is transmitted to a steering system 100s of the vehicle via a driving force transmission mechanism 104. The steering system 100s includes the handle 101, the front wheel 102, and the like. The electric power steering device 100 uses the driving force generated by the rotating machine 10 as an assist torque to assist the driver in steering the vehicle.

Since the current command value calculator 21 in the control device 3 differs from the first embodiment in calculation regarding a torque current command value (a q-axis current command value iq_ref), this point will be described. The steering torque Ts and a running speed S of the vehicle are input to the current command value calculator 21, and the q-axis current command value iq_ref is calculated on the basis of these inputs.

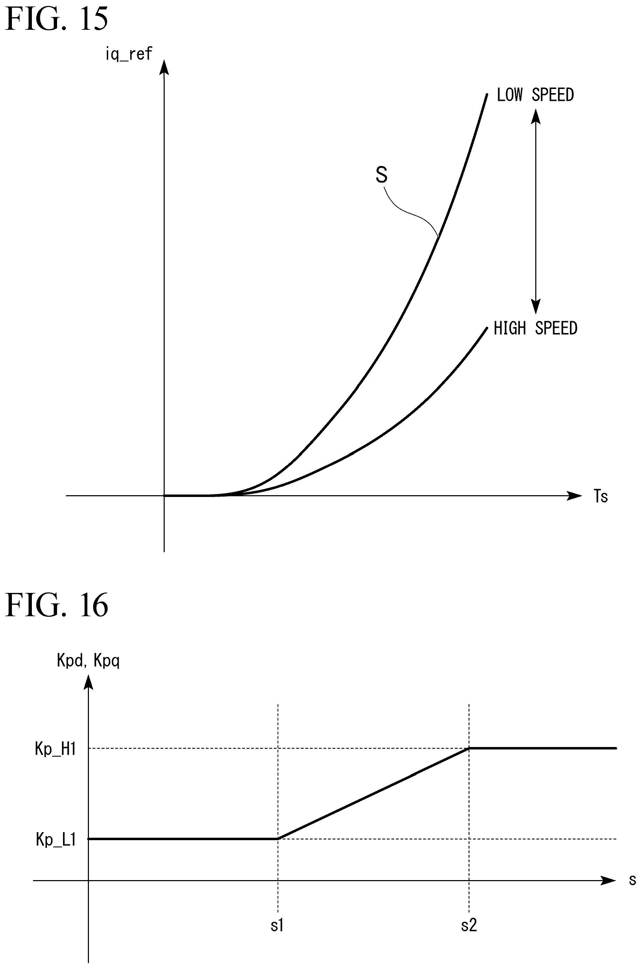

FIG. 15 is a graph showing a set value of the q-axis current command value iq_ref according to the steering torque Ts and the running speed S of the vehicle. As shown in this graph, as the steering torque Ts becomes greater, the value of the current command value iq ref increases, and a gradient of a change thereof also increases. Furthermore, as the running speed S of the vehicle increases, the current command value iq_ref becomes small. The value of the current command value iq_ref may be determined by further taking into account a damping torque or the like determined on the basis of the rotational angular speed ω.

As shown in FIG. 15, as the running speed S of the vehicle becomes lower, the gradient of the q-axis current command value iq_ref with respect to the steering torque Ts increases. As a result, when the steering torque Ts includes detection noise, the influence on the q-axis current command value iq_ref increases, leading to generation of vibration and noise from the rotating machine 10, or an unpleasant feeling when touching the handle 101.

Therefore, in the voltage command value calculation unit 24 in the third embodiment, according to the running speed S of the vehicle, the proportional gain Kpd in the d-axis voltage command value calculator 24d and the proportional gain Kpq in the q-axis voltage command value calculator 24q are varied as shown in FIG. 16. "Kp_H1" is referred to as a first speed reference value, and "Kp_L1" is referred to as a second speed reference value. The second speed reference value Kp_L1 is smaller than the first speed reference value Kp_H1.

When the running speed S of the vehicle is equal to or less than s1, the values of the proportional gains Kpd and Kpq are set to Kp_L1. In this way, by setting the values of the proportional gains Kpd and Kpq low, it is possible to suppress sensitively reacting of the q-axis current command value iq_ref to pulsations in the steering torque Ts. Further, when the running speed S of the vehicle is s2 or more, the q-axis current command value iq_ref is less affected by the pulsation of the steering torque Ts, and thus the proportional gains Kpd and Kpq are set to a high value Kp_H1. In this way, it is possible to provide an electric power steering device that suppresses the generation of vibrations and noises in the rotating machine 10 due to noise included in the detected steering torque value, and suppresses the driver's discomfort from the handle 101 by switching the proportional gains Kpd and Kpq according to the running speed S of the vehicle.

As shown in FIG. 16, when the running speed S of the vehicle is within a range of s1 to s2, the values of the proportional gains Kpd and Kpq are continuously changed within a range of Kp_H1 to Kp_L1. As a result, it is possible to suppress the discomfort felt by the driver due to sudden changes in the set values of the proportional gains Kpd and Kpq. The proportional gains Kpd and Kpq may be switched stepwise between Kp_H1 and Kp_L1.

As described above, the electric power steering device 100 according to this embodiment includes the control device 3, the AC rotating machine 10, and the driving force transmission mechanism 104 that transmits a driving force of the AC rotating machine 10 to the steering system 100s of the vehicle. With such a configuration, it is possible to provide the electric power steering device 100 that achieves both quietness and steering stability.

Further, in this embodiment, the proportional gains Kpd and Kpq are switched between the first speed reference value Kp_H1 and the second speed reference value Kp_L1 which is smaller than the first speed reference value Kp H1. The voltage command value calculation unit 24 sets the proportional gains Kpd and Kpq to a value lower than the first speed reference value Kp_H1 when the running speed S of the vehicle is smaller than a threshold value s2. With such a configuration, quietness can be improved in a situation in which steering noise is likely to be heard and a vehicle speed is low.

Fourth embodiment

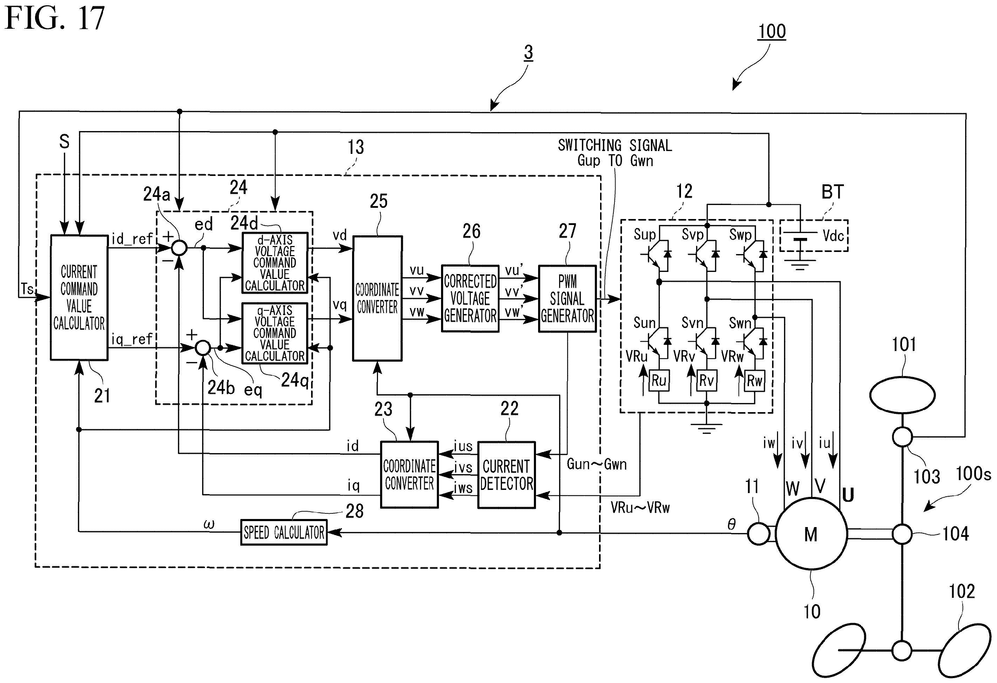

Next, a fourth embodiment will be described. As shown in FIG. 17, an electric power steering device 100 according to this embodiment includes a control device 3 that is the same as that of the third embodiment. The fourth embodiment is different from the technique described in the third embodiment in that the detected value input to the voltage command value calculation unit 24 is changed from the running speed S of the vehicle to the steering torque Ts, and some of calculation contents in the voltage command value calculation unit 24 is different. The other points are the same as those in the third embodiment, and thus the descriptions thereof will be omitted.

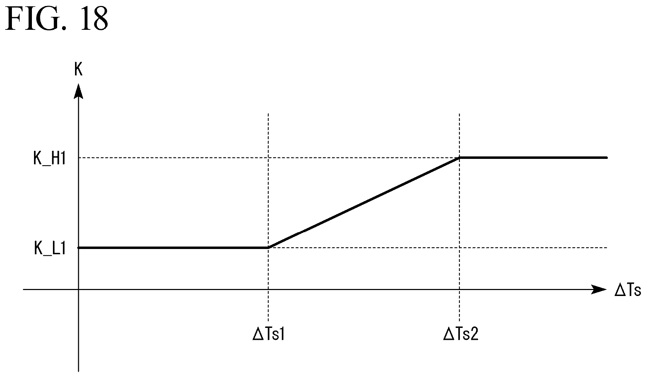

In FIG. 16 described in the third embodiment, as the steering torque Ts becomes smaller, a slope of the q-axis current command value iq_ref with respect to the steering torque Ts decreases, when the vehicle running speed S is low or high. In other words, when the steering torque Ts becomes smaller, there is a margin in steering stability, and thus there is room to reduce the limit gain K described in the second embodiment. Therefore, in the voltage command value calculation unit 24 in the fourth embodiment, the limit gain K is varied as shown in FIG. 18.

In FIG. 18, "ΔTs" is an amount of change in the steering torque Ts per unit time, "K_H1" is the first torque reference value, and "K_L1" is the second torque reference value. The second torque reference value K_L1 is smaller than the first torque reference value K_H1. The limit gain K varies in the range of K_L1 to K_H1 according to a magnitude of the amount of change ΔTs. Specifically, when ΔTs is equal to or less than the first torque threshold value ΔTs1, the value of the limit gain K is set to K_L1. When ΔTs is equal to or greater than the second torque threshold value ΔTs2, the value of the limit gain K is set to K_H1. When ΔTs is within the range of ΔTs1 to ΔTs2, the value of the limit gain K varies continuously within the range of K L1 to K H1. Thus, it is possible to reduce the vibrations and noises of the rotating machine 10 in a region in which the fluctuation of the steering torque Ts is small.

In FIG. 18, a horizontal axis is ΔTs. However, the same effect can be obtained by using the gradient (Δiq_ref/ΔTs) of the graph in FIG. 15 as the horizontal axis. The above gradient (Δiq_ref/ΔTs) is referred to as a "current torque gradient" in this specification. In other words, the current torque gradient is a ratio of an amount of change in the q-axis current command value iq_ref (Δiq_ref) to an amount of change in the steering torque Ts

($\Delta$Ts). When the current torque gradient is smaller than a threshold value, the proportional gains Kpd and Kpq may be set to the small value Kp_L1. Further, when at least one of the current command values iq_ref and id_ref is smaller than the threshold value, or when the steering torque Ts is smaller than the threshold value, the proportional gains Kpd and Kpq may be set to small values (for example, Kp_L1).

When the steering torque Ts or the current command values iq_ref and id_ref are small, the steering noise is likely to be noticeable. Therefore, in the fourth embodiment, a configuration is proposed in which when the current command values iq_ref and id_ref are equal to or less than the threshold value, or when the gradient (the current torque gradient $\Delta$iq_ref/$\Delta$Ts) in the graph representing the relationship between the steering torque Ts and the torque current command value iq_ref is smaller than the threshold value, or when the amount of change $\Delta$Ts of the steering torque Ts per unit time is smaller than the first torque threshold value $\Delta$Ts1, the proportional gains Kpd and Kpq are set to values lower than the first speed reference value Kp H1. Thus, in a situation in which steering noise is likely to be noticeable, non-interference control can be weakened to ensure quietness.

In the third and fourth embodiments, instead of inputting the rotational angular speed $\omega$ to the inductance amplifiers 106d and 106q with non-interference control, the result of the rotational angular speed $\omega$ passing through a low pass filter may be input. A cutoff frequency of the low pass filter is preferably higher than an upper limit value (for example, 5 Hz) of the steering frequency of the electric power steering device 100. In this case, introduction of the non-interference control has an effect of reducing noises and vibrations of the rotating machine 10 caused by noise components included in the rotational angular speed $\omega$. Therefore, a quiet electric power steering device 100 can be provided.

Although the first to fourth embodiments have been described above, the present disclosure is not limited to the above embodiments, and can be freely modified without departing from the gist of the present disclosure. Furthermore, the first to fourth embodiments described above can be combined as appropriate.

Each of the components of the rotating machine control devices 1 to 4 and the electric power steering device 100 described above has a computer system therein. Then, a program for realizing functions of each of the components of the rotating machine control devices 1 to 4 and the electric power steering device 100 described above is recorded on a computer-readable recording medium, and the program recorded on this recording medium may be read into a computer system and may be executed to perform processing in each of the components of the rotating machine control devices 1 to 4 and the electric power steering device 100 described above. Here, the expression "the program recorded on a recording medium is read into a computer system and is then executed" includes installing the program on the computer system. The "computer system" herein includes an OS and hardware such as peripheral devices.

Further, the "computer system" may include a plurality of computer devices connected via a network including the Internet or a communication line such as a WAN, LAN, or a dedicated line. Furthermore, the term "computer-readable recording medium" refers to portable media such as flexible disks, magneto-optical disks, ROMs, and CD-ROMs, and storage devices such as hard disks built into computer systems. In this way, the recording medium that stores the program may be a non-transitory recording medium such as a CD-ROM.

The recording medium also includes a recording medium provided internally or externally that can be accessed from a distribution server for distributing the program. The program may be divided into a plurality of parts, may be downloaded at different timings, and then may be combined with each of the components of the rotating machine control devices 1 to 4 and the electric power steering device 100, and the distribution servers that distribute each of the divided programs may also be different. Furthermore, a "computer-readable recording medium" includes a medium that retains a program for a certain period of time, such as a volatile memory (RAM) inside a computer system that serves as a server or client when a program is transmitted via a network. Moreover, the above-described program may be for realizing some of the above-described functions. Furthermore, it may be a so-called difference file (a difference program) that can realize the above-described functions in combination with a program already recorded in the computer system.

[Reference Signs List]

    1 to 4 Control device
    10 AC rotating machine
    12 Inverter
    22 Current detector
    24d, 24q First axis voltage command value calculator, second axis voltage command value calculator
    100 Electric power steering device
    104 Driving force transmission mechanism
    id, iq Detected current value
    id_ref, iq_ref Current command value
    iq ref Torque current command value
    iu, iv, iw Rotating machine current
    K Limit gain
    K_H First limit value
    K_L Second limit value
    Kp_H First proportional value
    Kp_H1 First speed reference value
    Kp_L Second proportional value
    Kp_L1 Second speed reference value
    Kpd, Kpq Proportional gain
    Ld d-axis inductance

m Voltage amplitude
m1 First voltage threshold value
m2 Second voltage threshold value
n1 First rotational speed threshold value
n2 Second rotational speed threshold value
Ru, Rv, Rw Shunt resistor
S Running speed
100s Steering system of vehicle
Sun, Svn, Swn Lower arm switching element
Sup, Svp, Swp Upper arm switching element
Ts Steering torque
vd, vq First axis voltage command value, second axis voltage command value
VRu, VRv, VRw Terminal voltage
vu, vv, vw Voltage command value
$\Delta$Ts Amount of change in steering torque
$\omega$ Rotational angular speed
$\omega$1 First rotational angular speed threshold value
$\omega$2 Second rotational angular speed threshold value
$\omega$cc Response angular frequency

## Claims

1. A control device of an AC rotating machine, comprising:

    an inverter that applies a voltage to the AC rotating machine;
    a current detector that detects a rotating machine current flowing through the AC rotating machine;
    a first axis voltage command value calculator that calculates a voltage command value of a first axis of two rotational axes of the AC rotating machine; and
    a second axis voltage command value calculator that calculates a voltage command value of a second axis of the two rotational axes,
    wherein the first axis voltage command value calculator performs an integral calculation using a first deviation that is a deviation between a current command value on the first axis and a detected current value of the rotating machine current on the first axis, and a second deviation that is a deviation between a current command value on the second axis and a detected current value of the rotating machine current on the second axis, and calculates the voltage command value of the first axis on the basis of a result of the integral calculation.

2. The control device of an AC rotating machine according to claim 1, wherein the first axis voltage command value calculator performs the integral calculation using a value obtained by multiplying the second deviation by a rotational angular speed of the AC rotating machine, an inductance on the second axis, and a response angular frequency for adjusting a frequency response of the rotating machine current to the current command value.

3. The control device of an AC rotating machine according to claim 1 or 2, wherein the first axis voltage command value calculator performs the integral calculation using a result of reducing a low frequency component of the second deviation.

4. The control device of an AC rotating machine according to any one of claims 1 to 3, wherein the first axis voltage command value calculator calculates the voltage command value of the first axis using a value obtained by multiplying the first deviation by a proportional gain,

    the proportional gain is switched between a first proportional value and a second proportional value smaller than the first proportional value, and
    when a voltage amplitude calculated on the basis of the voltage command value is equal to or higher than a first voltage threshold value, or when a rotational speed of the AC rotating machine is equal to or higher than a first rotational speed threshold value, or when a rotational angular speed of the AC rotating machine is equal to or greater than a first rotational angular speed threshold value, the proportional gain is set to the second proportional value.

5. The control device of an AC rotating machine according to claim 4, wherein the first axis voltage command value calculator executes the integral calculation using a value obtained by multiplying the second deviation by a limit gain,

    the limit gain is switched between a first limit value and a second limit value smaller than the first limit value, and
    when the voltage amplitude is equal to or less than the second voltage threshold value that is smaller than the first voltage threshold value, or when the rotational speed of the AC rotating machine is equal to or less than a second rotational speed threshold value that is smaller than the first rotational speed threshold value, or when the rotational angular speed of the AC rotating machine is equal to or less than a second rotational angular speed threshold value smaller than the first rotational angular speed threshold value, the limit gain is set to the second limit value.

6. The control device of an AC rotating machine according to claim 4 or 5, wherein the inverter includes three sets of upper arm switching elements, lower arm switching elements, and shunt resistors, each of which corresponds to three phases, and

the current detector detects the rotating machine current in the three phases on the basis of terminal voltages of the corresponding shunt resistors when the voltage amplitude is smaller than the first voltage threshold value.

7. The control device of an AC rotating machine according to any one of claims 4 to 6, wherein the first axis voltage command value calculator sets the proportional gain to the first proportional value when the rotating machine current exceeds a threshold value.

8. The control device of an AC rotating machine according to any one of claims 4 to 7, wherein the first axis voltage command value calculator sets the proportional gain to the first proportional value when a failure occurs in at least one location in the control device of the AC rotating machine.

9. An electric power steering device comprising:

the control device of the AC rotating machine according to any one of claims 1 to 8; the AC rotating machine; and a driving force transmission mechanism that transmits a driving force of the AC rotating machine to a steering system of a vehicle.

10. The electric power steering device according to claim 9, wherein the first axis voltage command value calculator calculates the voltage command value of the first axis using a value obtained by multiplying the first deviation by a proportional gain,

the proportional gain is switched between a first speed reference value and a second speed reference value that is less than the first speed reference value, and the first axis voltage command value calculator sets the proportional gain to a value smaller than the first speed reference value when a running speed of the vehicle is smaller than a threshold value.

11. The electric power steering device according to claim 10, wherein, when the current command value is equal to or less than a threshold value, or when the steering torque is equal to or less than a threshold value, or when a gradient of a graph representing a relationship between a steering torque and a torque current command value is less than a threshold value, or when an amount of change in the steering torque per unit time is smaller than a threshold value, the first axis voltage command value calculator sets the proportional gain to a value smaller than the first speed reference value.

12. The electric power steering device according to any one of claims 9 to 11, wherein the first axis voltage command value calculator performs the integral calculation using a result of passing the rotational angular speed of the AC rotating machine through a low pass filter of which a cutoff frequency is higher than an upper limit value of the steering frequency of the electric power steering device.

# FIG. 1

# FIG. 2

FIG. 3

FIG. 4

FIG. 5

```
        ┌─────────────┐
        │    START    │
        └──────┬──────┘
               │
               ▼
   ┌───────────────────────────┐
   │   Vmin = min(vu,vv,vw)    │────  S11
   └───────────┬───────────────┘
               │
               ▼
   ┌───────────────────────────┐
   │   voffset = 0.5Vdc—Vmin   │────  S12
   └───────────┬───────────────┘
               │
               ▼
   ┌───────────────────────────┐
   │    vu' = vu—voffset       │
   │    vv' = vv—voffset       │────  S13
   │    vw' = vw—voffset       │
   └───────────┬───────────────┘
               │
               ▼
        ┌─────────────┐
        │     END     │
        └─────────────┘
```

# FIG. 6

INVERTER OUTPUT UPPER LIMIT VALUE (Vdc)

INVERTER OUTPUT CENTRAL VALUE (Vdc/2)

INVERTER OUTPUT LOWER LIMIT VALUE (0)

INVERTER OUTPUT UPPER LIMIT VALUE (Vdc)

CURRENT DETECTION UPPER LIMIT VALUE Vdc×Tmin / Tc

INVERTER OUTPUT CENTRAL VALUE (Vdc/2)

INVERTER OUTPUT LOWER LIMIT VALUE (0)

THREE PHASES DETECTABLE RANGE

FIG. 7

TRANSFER CHARACTERISTIC
FROM iq_ref TO iq

BODE DIAGRAM

PRESENT DISCLOSURE

OTHER AXIS INTEGRAL INPUT
(Bid, Biq)=O

PRESENT DISCLOSURE

OTHER AXIS INTEGRAL INPUT
(Bid, Biq)=O

GAIN (dB)

PHASE (deg)

FREQUENCY (Hz)

24

FIG. 8

FIG. 9

EP 4 496 207 A1

# FIG. 10

EP 4 496 207 A1

FIG. 11

# FIG. 12

IMMEDIATELY AFTER Gnx TURNS ON (IMMEDIATELY AFTER
CHANGING FROM 0 TO 1), RINGING OCCURS FOR A FEW $\mu$s, AND
CORRECT CURRENT CANNOT BE OBTAINED FROM TERMINAL VOLTAGE.

# FIG. 13

# FIG. 14

EP 4 496 207 A1

# FIG. 15

# FIG. 16

FIG. 17

FIG. 18

## INTERNATIONAL SEARCH REPORT

| International application No. |
|---|
| **PCT/JP2022/011851** |

**A.    CLASSIFICATION OF SUBJECT MATTER**

*H02P 21/22*(2016.01)i
FI:    H02P21/22

According to International Patent Classification (IPC) or to both national classification and IPC

**B.    FIELDS SEARCHED**

Minimum documentation searched (classification system followed by classification symbols)

H02P21/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2014-93889 A (YASKAWA ELECTRIC CORP) 19 May 2014 (2014-05-19) paragraphs [0010]-[0093], fig. 1-8 | 1, 9 |
| A | | 2-8, 10-12 |
| X | JP 2007-274863 A (AISIN AW CO LTD) 18 October 2007 (2007-10-18) paragraphs [0002], [0022]-[0101], fig. 1-9 | 1, 9 |
| A | | 2-8, 10-12 |
| X | JP 11-98900 A (HITACHI LTD) 09 April 1999 (1999-04-09) paragraphs [0008]-[0050], fig. 1-9, in particular, paragraphs [0044]-[0050], fig. 8, 9 | 1 |
| A | | 2-12 |

☐ Further documents are listed in the continuation of Box C.    ☑ See patent family annex.

| *    Special categories of cited documents: | "T"    later document published after the international filing date or priority date and not in conflict with the application but cited to understand the principle or theory underlying the invention |
|---|---|
| "A"    document defining the general state of the art which is not considered to be of particular relevance | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **12 May 2022** | **24 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/011851**

| Patent document cited in search report | | | Publication date (day/month/year) | Patent family member(s) | | | Publication date (day/month/year) |
|---|---|---|---|---|---|---|---|
| JP | 2014-93889 | A | 19 May 2014 | US | 2014/0125261 | A1 | |
| | | | | paragraphs [0019]-[0102], fig. 1-8 | | | |
| | | | | CN | 103812410 | A | |
| | | | | IN | 4507CH2013 | A | |
| JP | 2007-274863 | A | 18 October 2007 | (Family: none) | | | |
| JP | 11-98900 | A | 09 April 1999 | (Family: none) | | | |

Form PCT/ISA/210 (patent family annex) (January 2015)